(19)

**Europäisches Patentamt**
**European Patent Office**
**Office européen des brevets**

(11)  **EP 4 425 379 B1**

(12) **EUROPEAN PATENT SPECIFICATION**

(45) Date of publication and mention
of the grant of the patent:
**25.03.2026 Bulletin 2026/13**

(21) Application number: **24160359.6**

(22) Date of filing: **28.02.2024**

(51) International Patent Classification (IPC):
**G06F 21/62** *(2013.01)* **G06N 3/045** *(2023.01)*
**G06N 3/082** *(2023.01)* **G06N 3/10** *(2006.01)*
**G06N 3/084** *(2023.01)*

(52) Cooperative Patent Classification (CPC):
**G06F 21/62; G06N 3/045; G06N 3/082;**
**G06N 3/084; G06N 3/105**

(54) **SYSTEMS AND METHODS FOR HYPERGRAPH BASED NEURAL NETWORKS**

SYSTEME UND VERFAHREN FÜR HYPERGRAPHBASIERTE NEURONALE NETZWERKE

SYSTÈMES ET PROCÉDÉS POUR RÉSEAUX NEURONAUX À BASE D'HYPERGRAPHE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **28.02.2023 US 202363448722 P**
**28.02.2023 US 202363448724 P**
**28.02.2023 US 202363448738 P**
**01.03.2023 US 202363449241 P**
**01.03.2023 US 202363449245 P**
**27.02.2024 US 202418589182**

(43) Date of publication of application:
**04.09.2024 Bulletin 2024/36**

(73) Proprietors:
• **Infosys Limited**
**560-100 Bangalore (IN)**
• **InvertIT**
**Columbus, IN 47203 (US)**

(72) Inventor: **SCHILDERS, Steven**
**Columbus, 47203 (US)**

(74) Representative: **Finnegan Europe LLP**
**1 London Bridge**
**London SE1 9BG (GB)**

(56) References cited:
**CN-A- 114 547 325**   **US-A1- 2018 276 261**
**US-A1- 2021 306 377**   **US-A1- 2022 309 179**

• **FRANCESCO TUDISCO ET AL: "A nonlinear**
**diffusion method for semi-supervised learning**
**on hypergraphs", ARXIV.ORG, CORNELL**
**UNIVERSITY LIBRARY, 201 OLIN LIBRARY**
**CORNELL UNIVERSITY ITHACA, NY 14853, 11**
**February 2022 (2022-02-11), XP091144141**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**RELATED APPLICATIONS**

The present application claims priority to U.S. Provisional Patent Application Serial Nos. 63/449,245, filed March 1, 2023; 63,449/241, filed March 1, 2023; 63/448,724, filed February 28, 2023; 63/448,722, filed February 28, 2023; 63/448,738, filed February 28, 2023.

**TECHNICAL FIELD**

The present disclosure relates to executable graph-based models. Particularly, but not exclusively, the present disclosure relates to modelling a neural network as part of an executable graph-based model; more particularly, but not exclusively, the present disclosure relates to modelling a neural network as a hypergraph within an executable graph-based model.

**BACKGROUND**

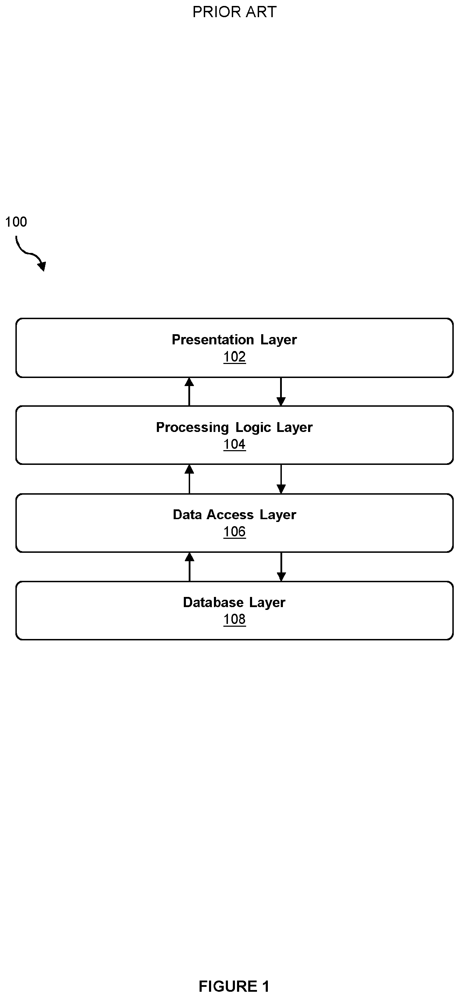

Modern system designs typically separate data storage from any functional data structure used from a processing logic perspective. This separation often occurs when data is "at rest" or at runtime where the processing system interacts with a copy of the relevant data in the processing space that can be of a different representation. This separation also leads to an impedance mismatch which requires some form of a data management solution to perform the necessary mappings between the two states. As a result of this separation of concerns, the processing logic is typically performed in a separate technology and physical tier (in an n-tier architecture) from the data. This is illustrated in the example n-tier architecture shown in Figure 1.

The example n-tier architecture 100 comprises a presentation layer 102, a processing logic layer 104, a data access layer 106, and a database layer 108. The presentation layer 102 comprises applications or components which are used to display the outputs of the processing logic layer 104 to a user or users. The processing logic layer 104 comprises applications, components, or services which perform some form of processing on the data obtained from the data access layer 106. The data access layer 106 comprises the applications, components, and/or services which can access the data used by the processing logic layer 104 and stored at the database layer 108. The database layer 108 handles the persistent storage of the data used by the system (e.g., in the form of a relational database, flat file, NoSQL database, graph database, and the like).

The layers of the example *n*-tier architecture 100 are technically separated. Each layer may utilize a separate set of components to perform specific functionality (e.g., a database management system is used in the database layer 108 whilst an enterprise application is used in the processing logic layer 104). The layers of the *n*-tier architecture 100 may also be physically separated. For example, the database layer 108 may execute on a remote cloud service, the processing logic layer 104 may execute on a network within an enterprise, and the presentation layer 102 may execute on a user device within the enterprise. While some architectural designs require a clear separation of concerns between data and the use of the data, often the separation enforced by architectures such as that illustrated in Figure 1 can severely inhibit the flexibility, extensibility, and responsiveness of any system created. Documents US2021/306377 and CN114547325 form part of the technological background

Therefore, there is a need for enhanced architectures which provide improved flexibility, extensibility, and responsiveness thereby providing more efficient data processing systems.

**SUMMARY OF DISCLOSURE**

According to an embodiment of the present disclosure, there is provided a system comprising a memory storing an artificial neural network (ANN) modelled as an overlay hypergraph. The overlay hypergraph comprises a plurality of hyperedges arranged across an input layer, at least one hidden layer, and an output layer, wherein a hyperedge of the plurality of hyperedges represents an artificial neuron within the ANN and comprises a set of role nodes each of which representing a portion of a connective relationship within the ANN. The overlay hypergraph further comprises a plurality of role nodes, wherein a role node of the plurality of role nodes represents a connection between layers of the ANN and comprises a first connective relationship associated with a first hyperedge within a first layer and a second connective relationship associated with a second hyperedge within a second layer such that the role node functionally connects the first hyperedge and the second hyperedge. The overlay hypergraph further comprises one or more overlay nodes comprising processing logic operable to interact with at least one hyperedge or at least one role node coupled to the one or more overlay nodes. The system further comprises processing circuitry coupled to the memory and configured to: provide an input signal to the input layer of the overlay hypergraph and propagate the input signal through the overlay hypergraph to compute an output signal, wherein processing logic of at least one of the one or more overlay nodes is executed as part of the input signal being propagated through the overlay hypergraph.

According to an additional embodiment of the present disclosure there is provided a method comprising obtaining, by processing circuitry, an artificial neural network (ANN) modelled as an overlay hypergraph. The overlay hypergraph comprising: (i) a plurality of hyperedges arranged across an input layer, at least one hidden layer, and an output layer, wherein a hyperedge of the plurality of hyperedges represents an artificial neuron within the ANN and comprises a set of role nodes each of which representing a portion of a connective relationship within the ANN; (ii) a plurality of hypernodes, wherein a hypernode of the plurality of hypernodes represents a connection between layers of the ANN and comprises a first role node of a first hyperedge and a second role node of a second hyperedge such that the hypernode functionally connects the first hyperedge and the second hyperedge; and (iii) one or more overlay nodes comprising processing logic operable to interact with at least one hypernode, at least one hyperedge, or at least one role node coupled to the overlay node. The method further comprises providing, by the processing circuitry, an input signal to the input layer of the overlay hypergraph and propagating, by the processing circuitry, the input signal through the overlay hypergraph to compute an output signal, wherein processing logic of at least one of the one or more overlay nodes is executed as part of the input signal being propagated through the overlay hypergraph.

According to a further embodiment of the present disclosure there is provided a non-transitory computer readable medium including instructions which, when executed by processing circuitry, cause the processing circuitry to obtain an artificial neural network (ANN) modelled as an overlay hypergraph. The overlay hypergraph comprising: (i) a plurality of hyperedges arranged across an input layer, at least one hidden layer, and an output layer, wherein a hyperedge of the plurality of hyperedges represents an artificial neuron within the ANN and comprises a set of role nodes each of which representing a portion of a connective relationship within the ANN; (ii) a plurality of hypernodes, wherein a hypernode of the plurality of hypernodes represents a connection between layers of the ANN and comprises a first role node of a first hyperedge and a second role node of a second hyperedge such that the hypernode functionally connects the first hyperedge and the second hyperedge; and (iii) one or more overlay nodes comprising processing logic operable to interact with at least one hypernode, at least one hyperedge, or at least one role node coupled to the overlay node. The processing circuitry is further caused to provide an input signal to the input layer of the overlay hypergraph and propagate the input signal through the overlay hypergraph to compute an output signal, wherein processing logic of at least one of the one or more overlay nodes is executed as part of the input signal being propagated through the overlay hypergraph.

Further embodiments and embodiments of the present disclosure are set out in the appended claims. Advantages will become more apparent to those of ordinary skill in the art from the following description of the preferred embodiments which have been shown and described by way of illustration. As will be realized, the present embodiments may be capable of other and different embodiments, and their details are capable of modification in various respects. Accordingly, the drawings and description are to be regarded as illustrative in nature and not as restrictive.

## BRIEF DESCRIPTION OF FIGURES

Embodiments of the present disclosure will now be described, by way of example only, and with reference to the accompanying drawings, in which:

Figure 1 shows a prior-art *n*-tier architecture;

Figure 2 shows an executable graph-based model according to an embodiment of the present disclosure;

Figure 3 shows a system for executable graph-based models according to an embodiment of the present disclosure;

Figure 4A shows the general structure of a node within an executable graph-based model according to an embodiment of the present disclosure;

Figure 4B shows an executable node according to an embodiment of the present disclosure;

Figure 4C shows the structure of a contract node according to an embodiment of the present disclosure;

Figure 5A shows the general structure of a runtime node according to an embodiment of the present disclosure;

Figure 5B shows an executable node template and an executable node instance according to an embodiment of the present disclosure;

Figure 5C shows an executable runtime node according to an embodiment of the present disclosure;

Figure 5D shows the executable runtime node of Figure 4C but with one or more executable nodes within the base runtime node according to an embodiment of the present disclosure;

Figure 6 illustrates the concept of a hyperedge according to an embodiment of the present disclosure;

Figure 7 shows an artificial neural network (ANN) as is known in the art;

Figure 8 shows an overlay neuron structure according to an embodiment of the present disclosure;

Figure 9A shows the artificial neural network of Figure 7 modelled as an overlay hypergraph;

Figure 9B shows a portion of the overlay hypergraph shown in Figure 9A;

Figure 10 shows the integration of an overlay hypergraph based neural network within a graph-based model according to embodiments of the present disclosure;

Figure 11 shows the integration of multiple neural networks in the form of a neural mesh according to embodiments of the present disclosure;

Figure 12 shows an executable graph-based model for monitoring and controlling a manufacturing system according to an embodiment of the present disclosure;

Figure 13 shows a method according to an embodiment of the present disclosure; and

Figure 14 shows an example computing system for carrying out the methods of the present disclosure.

## DETAILED DESCRIPTION

Existing architectures, such as that described in relation to Figure 1 above, maintain a forced technical, and sometimes physical, separation between the processing logic and the data. As previously stated, the technical and physical separation of data and processing logic can be inhibitive to the types of architectural systems that can be created. Furthermore, the complexity of $n$-tier architectures, and their strict separation of functionality (layers), can severely impact system real-time processing performance. This, in turn, leads to processing delays or latency which reduces the applicability of such architectures being used in time-critical application settings such as medical devices, autonomous vehicles, and real-time control systems. In addition, the central storage of all data within a single database or database layer (e.g., the database layer 108 show in Figure 1) restricts the ways in which a user may access, maintain, and manage their personal data stored by an enterprise within the single database or database layer.

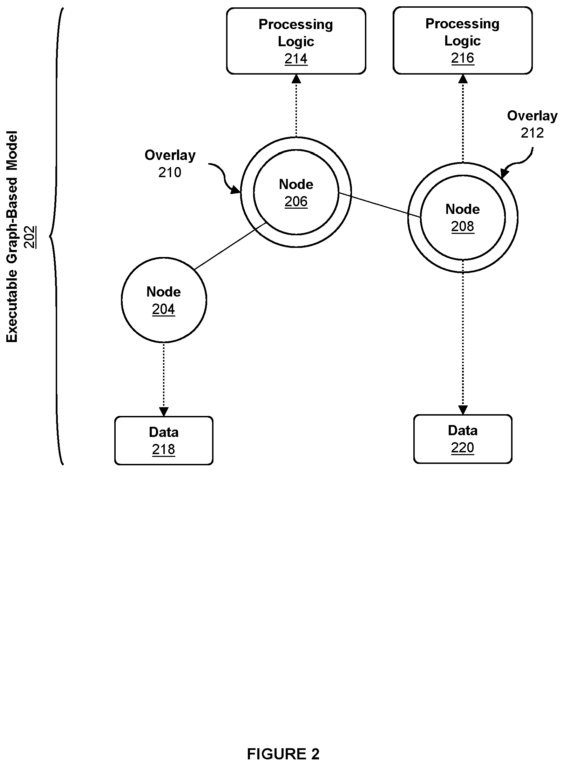

Executable graph-based models dynamically combine data and data processing functionality at runtime whilst their separability may be maintained when at rest. This is illustrated in Figure 2.

Figure 2 illustrates an executable graph-based model 202 according to an embodiment of the present disclosure.

The executable graph-based model 202 is generally formed of a data structure (i.e., a graph-based model, or graphical model) comprising a plurality of nodes 204-208. The executable graph-based model 202 enables the plurality of nodes 204-208 to be functionally extended with processing logic via the use of overlays 210, 212. Each overlay comprises processing logic, such as processing logic 214 and 216 which are associated with the overlays 210 and 212 respectively. At run-time, data such as the data 218 and the data 220 are associated with nodes within the executable graph-based model 202 and the overlays 210 and 212 provide the functionality to respond to stimuli an interact with, manipulate, or otherwise process the data. As such, the data processing functionality is separate from the data itself when offline (i.e., when persisted to storage) and is combined dynamically with the data at run-time.

As such, the executable graph-based model 202 maintains separability of the data and the data processing logic when offline thereby allowing the user to maintain control over their data. Moreover, by integrating the data and the data processing logic within a single model, processing delays or latency are reduced because the data and the processing logic exist within the same logical system. Therefore, the executable graph-based model 202 is applicable to a range of time-critical systems where efficient processing of stimuli is required.

The present disclosure is directed to the extension of executable graph-based models to include neural network based models and functionality. In particular, the present disclosure describes a neuron overlay structure which is composed to form an overlay hypergraph based neural network which may form a part of an executable graph-based model. Advantageously, an overlay hypergraph based neural network allows for the neural network, along with additional processing logic and functionality contained in overlay nodes, to be integrated and executed in situ with the data model thereby providing an efficient, configurable, and flexible system.

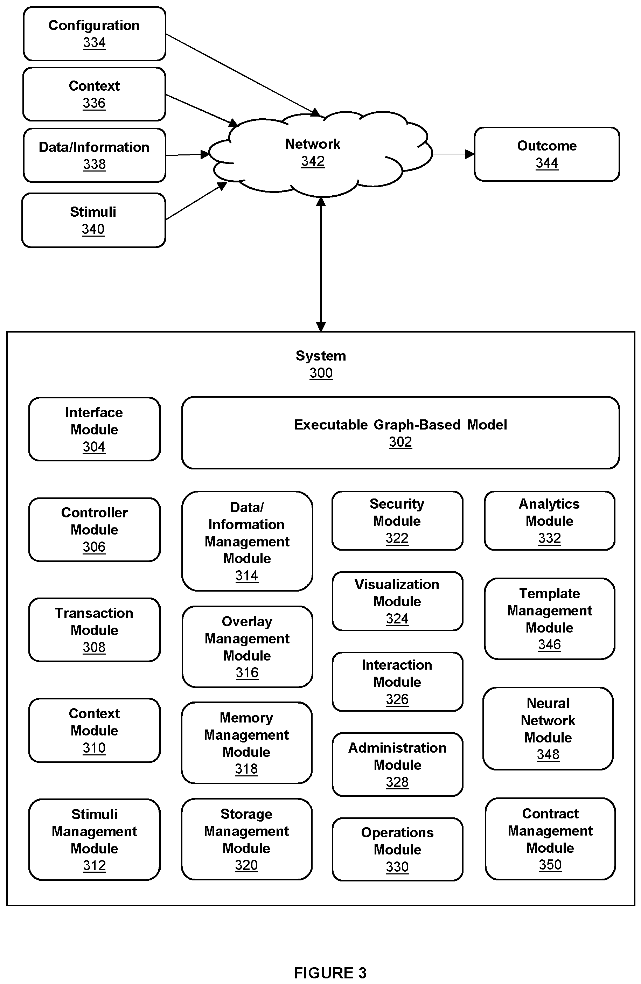

Figure 3 shows a system 300 for execution, management, and configuration of executable graph-based models according to an embodiment of the present disclosure.

The system 300 comprises an executable graph-based model 302 similar to the executable graph-based model 202 described in brief above in relation to Figure 2. The system 300 further comprises an interface module 304, a controller module 306, a transaction module 308, a context module 310, a stimuli management module 312, a data management module 314, an overlay management module 316, a memory management module 318, a storage management module 320, a security module 322, a visualization module 324, an interaction module 326, an administration module 328, an operations module 330, and an analytics module 332. Figure 3 further shows a configuration 334, a context 336, data 338, stimuli 340, a network 342, and an outcome 344. The system 300 further comprises a template management module 346, a neural network management module 348, and a contract management module 350. The interface module 304, the controller module 306, the transaction module 308, the context module 310, the stimuli management module 312, the data management module 314, the overlay management module 316, the memory management module 318, the storage management module 320, the security module 322, the visualization module 324, the interaction module 326, the administration module 328, the operations module 330, the analytics module 332, the template management module 346, the neural network management module 348, and the contract management module 350 may be collectively referred to as "a plurality of modules".

The skilled person will appreciate that the present description of the system 300 is not intended to be limiting, and the system 300 can include, or interface with, further modules not expressly described herein. Moreover, the functionality of two or more modules of the plurality of modules can be combined within a single module. For example, the functionalities of the memory management module 318, the storage management module 320, and the security module 322 may be combined within a single module. Conversely, the functionality of a single module can be split into two or more further modules which can be executed on two or more devices. The modules described below in relation to the system 300 can operate in a parallel, distributed, or networked fashion. The system 300 can be implemented in software, hardware, or a combination of both software and hardware. Examples of suitable hardware modules include, a general-purpose processor, a field programmable gate array (FPGA), and/or an application specific integrated circuit (ASIC). Software modules can be expressed in a variety of software languages such as C, C++, Java, Ruby, Visual Basic, Python, and/or other object-oriented, procedural, or other programming language.

The executable graph-based model 302 corresponds to the application-specific combination of data and data processing logic which is manipulated, processed, and/or otherwise handled by the other modules within the system 300. As stated above, the structure and functionality of the data processing logic (e.g., processing logic which reads, manipulates, transforms, etc. the data) is separate from the data itself when offline (or at rest) and is combined dynamically at run-time. As such, different executable graph-based models are utilized for different application areas and problem domains. The skilled person will appreciate that whilst only one executable graph-based model 302 is shown in Figure 3, in some embodiments a system stores and maintains more than one executable graph-based model.

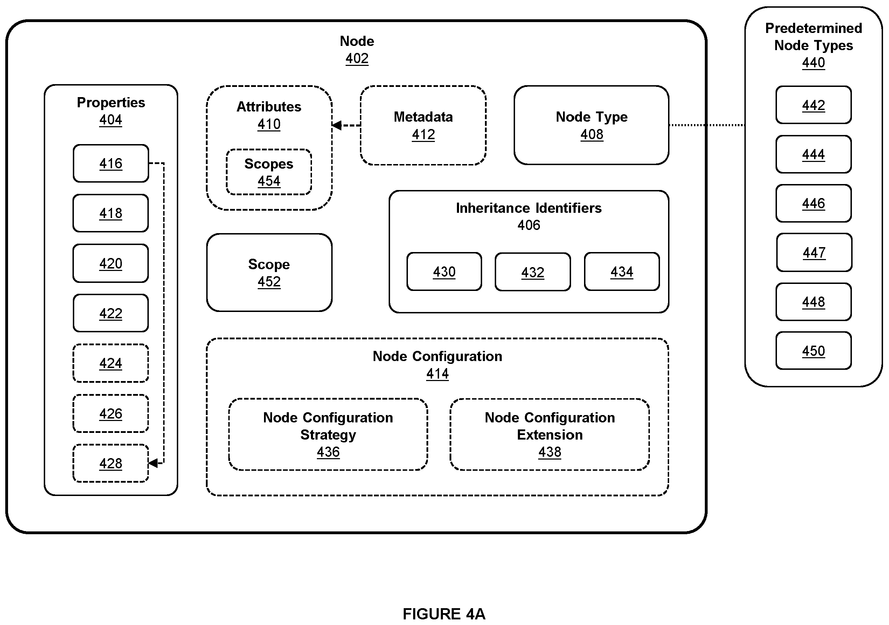

All elements within the executable graph-based model 302 (both the data and the data processing functionality) are nodes. In other words, nodes represent both the data and the data processing functionality within the executable graph-based model 302. As will be described in more detail in relation to Figure 4A below, a node forms the fundamental building block of all executable graph-based models such as the executable graph-based models 202 and 302. As such, the executable graph-based model 302 comprises one or more nodes which can be dynamically generated, extended, or processed by one or more other modules within the system 300 (e.g., by the data management module 314 and/or the overlay management module 316). Here, a dynamically generated node is a node within an executable graph-based model which is generated at run-time (e.g., using data obtained at run-time and/or in response to a stimulus or action received at run-time).

The interface module 304 provides a common interface between internal components of the system 300 and/or external sources. The interface module 304 provides an application programmable interface ("API"), scripting interface, or any other suitable mechanism for interfacing externally or internally with any module of the system 300. In the example shown in Figure 3, the configuration 334, the context 336, the data 338, and the stimuli 340 are received by the interface module 304 of the system 300 via the network 342. Similarly, outputs produced by the system 300, such as the outcome 344, are passed by the interface module 304 to the network 342 for consumption or processing by external systems. In one embodiment, the interface module 304 supports one or more messaging patterns or protocols such as the Simple Object Access protocol (SOAP), the REST protocol, and the like. The interface module 304 thus allows the system 300 to be deployed in any number of application areas, operational environments, or architecture deployments. Although not illustrated in Figure 3, the interface module 304 is communicatively coupled (i.e., connected either directly or indirectly) to one or more other modules or elements within the system 300 such as the controller module 306, the context module 310, the executable graph-based model 302 and the like. In one embodiment, the interface module 304 is communicatively coupled (i.e., connected either directly or indirectly) to one or more overlays within the executable graph-based model 302.

The controller module 306 handles and processes interactions and executions within the system 300. As will be described in more detail below, stimuli (and their associated contexts) provide the basis for all interactions within the executable graph-based model 302. Processing of such stimuli may lead to execution of processing logic associated with one or more overlays within the executable graph-based model 302. The processing of a stimulus within the system 300 may be referred to as a system transaction. The processing and execution of stimuli (and associated overlay execution) within the system 300 is handled by the controller module 306. The controller module 306 manages all received input stimuli (e.g., the stimuli 340) and processes them based on a corresponding context (e.g., the context 336). The context associated with a stimulus determines the priority that is assigned to processing the stimulus by the controller module 306. This allows each stimulus to be configured with a level of importance and prioritization within the system 300.

The controller module 306 maintains the integrity of the modules within the system 300 before, during, and after a system transaction. The transaction module 308, which is associated with the controller module 306, is responsible for maintaining integrity of the system 300 through the lifecycle of a transaction. Maintaining system integrity via the controller module 306 and the transaction module 308 allows a transaction to be rolled back in the event of an expected or unexpected software or hardware fault or failure. The controller module 306 is configured to handle the processing of stimuli and transactions through architectures such as parallel processing, grid computing, priority queue techniques, and the like. In one embodiment, the controller module 306 and the transaction module 308 are communicatively coupled (i.e., connected either directly or indirectly) to one or more overlays within the executable graph-based model 302.

As stated briefly above, the system 300 utilizes a context-driven architecture whereby a stimulus within the system 300 is associated with a context which is used to adapt the handling or processing of the stimulus by the system 300. The context module 310 manages the handling of contexts within the system 300 and is responsible for processing any received contexts (e.g., the context 336) and translating the received context to an operation execution context. In some examples, the operation execution context is larger than the received context because the context module 310 supplements the received context with further information necessary for the processing of the received context. The context module 310 passes the operational execution context to one or more other modules within the system 300 to drive the execution of the stimulus associated with the operational execution context. Contexts within the system 300 can be external or internal. While some contexts apply to all application areas and problem spaces, some applications may require specific contexts to be generated and used to process received stimuli. As will be described in more detail below, the executable graph-based model 302 is configurable (e.g., via the configuration 334) so as only to execute within a given execution context for a given stimulus.

The stimuli management module 312 processes externally received stimuli (e.g., the stimuli 340) and any stimuli generated internally from any module within the system 300. The stimuli management module 312 is communicatively coupled (i.e., connected either directly or indirectly) to one or more overlays within the executable graph-based model 302 to facilitate processing of stimuli within the executable graph-based model 302. The system 300 utilizes different types of stimuli such as a command (e.g., a transactional request), a query, or an event received from an external system such as an Internet-of-Things (IoT) device. As previously stated, a stimulus can be either externally or internally generated. For example, a stimulus can be an event internally triggered (generated) from any of the modules within the system 300. Such internal stimuli indicate that something has happened within the system 300 such that subsequent handling by one or more other modules within the system 300 may be required. Internal stimuli can also be triggered (generated) from execution of processing logic associated with overlays within the executable graph-based model 302. The stimuli management module 312 communicates and receives stimuli in real-time or near-real-time. In some examples, stimuli are scheduled in a batch process. The stimuli management module 312 utilizes any suitable synchronous or asynchronous communication architectures or approaches in communicating the stimuli (along with associated information). All stimuli within the system 300 are received and processed (along with a corresponding context) by the stimuli management module 312, which then determines the processing steps to be performed. In one embodiment, the stimuli management module 312 processes the received stimuli in accordance with a predetermined configuration (e.g., the configuration 334) or dynamically determines what processing needs to be performed based on the contexts associated with the stimuli and/or based on the state of the executable graph-based model 302. In some examples, processing of a stimulus results in one or more outcomes being generated (e.g., the outcome 344). Such outcomes are either handled internally by one or more modules in the system 300 or communicated via the interface module 304 as an external outcome. In one embodiment, all stimuli and corresponding outcomes are recorded for auditing and post-processing purposes (e.g., by the operations module 330 and/or the analytics module 332).

The data management module 314 manages all data or information within the system 300 (e.g., the data 338) for a given application. Operations performed by the data management module 314 include data loading, data unloading, data modelling, and data processing. The data management module 314 is communicatively coupled (i.e., connected either directly or indirectly) to one or more other modules within the system 300 to complete some or all of these operations. For example, data storage is handled in conjunction with the storage management module 320 (as described in more detail below).

The overlay management module 316 manages all overlays within the system 300. Operations performed by the overlay management module 316 includes overlay and overlay structure modelling, overlay logic creation and execution, and overlay loading and unloading (within the executable graph-based model 302). The overlay management module 316 is communicatively coupled (i.e., connected either directly or indirectly) to one or more other modules within the system 300 to complete some or all of these operations. For example, overlays can be persisted in some form of physical storage using the storage management module 320 (as described in more detail below). As a further example, overlays can be compiled and preloaded into memory via the memory management module 318 for faster runtime execution. The design and functionality of overlays is discussed in greater detail in relation to Figure 4A below.

The memory management module 318 is configured to manage and optimize the memory usage of the system 300. The memory management module 318 thus helps to improve the responsiveness and efficiency of the processing performed by one or more of the modules within the system 300 by optimizing the memory handling performed by these modules. The memory management module 318 uses direct memory or some form of distributed memory management architecture (e.g., a local or remote caching solution). Additionally, or alternatively, the memory management module 318 deploys multiple different types of memory management architectures and solutions. (e.g., reactive caching approaches such as lazy loading or a proactive approach such as write-through cache may be employed). These architectures and solutions are deployed in the form of a flat (single-tiered) cache or a multi-tiered caching architecture where each layer of the caching architecture can be implemented using a different caching technology or architecture solution approach. In such implementations, each cache or caching tier can be configured (e.g., by the configuration 334) independently of the requirements for one or more of modules of the system 300. For example, data priority and an eviction strategy, such as least-frequently-used ("LFU") or least-recently-used ("LRU"), can be configured for all or parts of the executable graph-based model 302. In one embodiment, the memory management module 318 is communicatively coupled (i.e., connected either directly or indirectly) to one or more overlays within the executable graph-based model 302.

The storage management module 320 manages the temporary or permanent storage of data within the system 300. The storage management module 320 is any suitable low-level storage device solution (such as a file system) or any suitable high-level storage technology such as another database technology (e.g., relational database management system (RDBMS) or NoSQL database). The storage management module 320 is directly connected to the storage device upon which the relevant data is persistently stored. For example, the storage management module 320 can directly address the computer readable medium (e.g., hard disk drive, external disk drive, or the like) upon which the data is being read or written. Alternatively, the storage management module 320 is connected to the storage device via a network such as the network 342 shown in Figure 3. The storage management module 320 uses "manifests" to manage the interactions between the storage device and the modules within the system 300. In one embodiment, the storage management module 320 is communicatively coupled (i.e., connected either directly or indirectly) to one or more overlays within the executable graph-based model 302.

The security module 322 manages the security of the system 300. This includes the security at a system level and at a module level. Security is hardware related, network related, or software related, depending on the operational environment, the architecture of the deployment, or the data and information contained within the system 300. For example, if the system is deployed with a web-accessible API (as described above in relation to the interface module 304), then the security module 322 can enforce a hypertext transfer protocol secure (HTTPS) protocol with the necessary certification. As a further example, if the data or information received or processed by the system 300 contains Personally Identifiable Information (PII) or Protected Health Information (PHI), then the security module 322 can implement one or more layers of data protection to ensure that the PII or PHI are correctly processed and stored. In an additional example, in implementations whereby the system 300 operates on United States of America citizen medical data, the security module 322 can enforce additional protections or policies as defined by the United States Health Insurance Portability and Accountability Act (HIPAA). Similarly, if the system 300 is deployed in the European Union (EU), the security module 322 can enforce additional protections or policies to ensure that the data processed and maintained by the system 300 complies with the General Data Protection Regulation ("GDPR"). In one embodiment, the security module 322 is communicatively coupled (i.e., connected either directly or indirectly) to one or more overlays within the executable graph-based model 302 thereby directly connecting security execution to the data/information in the executable graph-based model 302. The security module 322 thus acts as a centralized coordinator working in conjunction with the data management module 314 and overlay management module 316 for managing and executing security-based overlays.

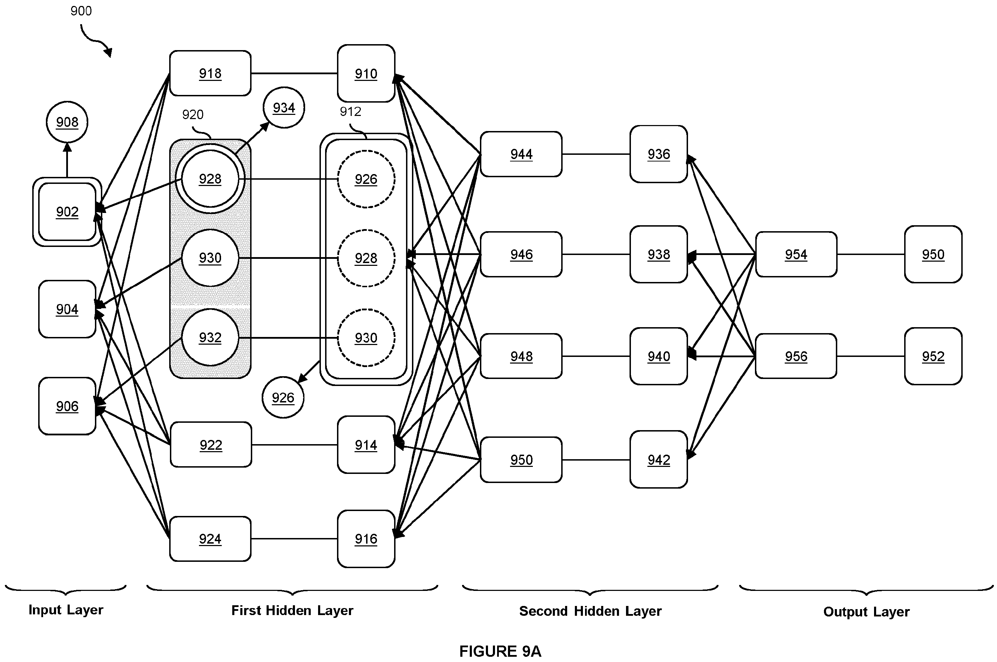

The visualization module 324 and the interaction module 326 facilitate display and interaction of the executable graph-based model 302 and other parts of the system 300. As described in more detail below in relation to Figures 9A-9G, the visualization module 324 provides one or more displays, or visualizations, of the executable graph-based model 302 for review by a user of the system 300, whilst the interaction module 326 processes user interactions (e.g., inputs, commands, etc.) with the displays, or visualizations, and/or any other module within the system 300. The visualization module 324 and the interaction module 326 provide complex interactions capabilities such as standard two- and three-dimensional device interactions using a personal computer or mobile device and their attachable peripherals (e.g., keyboard, mouse, screen, etc.). Additionally, or alternatively, visualization module 324 and the interaction module 326 provide more advanced multi-dimensional user and visualization experiences such as virtual reality ("VR") or augmented reality ("AR") solutions. In one embodiment, the visualization module 324 and the interaction module 326 are communicatively coupled (i.e., connected either directly or indirectly) to one or more overlays within the executable graph-based model 302.

The administration module 328 manages all configurable embodiments of the system 300 and the associated modules therein. Configuration is either directly embedded within the modules of the system 300 (for example, via hardware, bios, or other systems settings that are preset in the manufacturing process or software development and installation processes) or provided as dynamic configurations (e.g., via the configuration 334). Such dynamic configurations are controllable and changeable by an end-user with the appropriate administrative privileges. In one embodiment, the degree of administrative privileges associated with an end-user are contained within a received context (e.g., the context 336). Here, the end-user is a person connected to the administration module 328 via the interface module 304 or a system user directly connected to the administration module 328. In one embodiment, the administration module 328 provides read-only access to all configuration settings or allows some (or all) of the configuration settings to be changed by specific user groups defined in the administration module 328 (e.g., all users associated with a user group having sufficient access privileges). In embodiments where configurations are pre-set or predetermined, the administration module 328 provides capabilities to reset or return the system 300 to its initial state or "factory settings". In one embodiment, the administration module 328 is communicatively coupled (i.e., connected either directly or indirectly) to one or more overlays within the executable graph-based model 302.

The operations module 330 tracks operational metrics, module behavior, and the system 300. Operational metrics tracked by the operations module 330 include the running status of each module, the operating performance of transactions performed, and any other associated metrics to help determine the compliance of the entire system, or any module thereof, in relation to non-functional requirements. In one embodiment, the operations module 330 is communicatively coupled (i.e., connected either directly or indirectly) to one or more overlays within the executable graph-based model 302.

The analytics module 332 performs any analytical processing required by the modules within the system 300. The analytics module 332 processes any data embedded, or overlay contained, within the executable graph-based model 302 or created separately by the system 300 (e.g., the operation metrics produced by the operations module 330). As such, the analytics module 332 is communicatively coupled (i.e., connected either directly or indirectly) to one or more nodes and/or one or more overlays within the executable graph-based model 302.

The template management module 346 performs operations in relation to template-driven generation of executable graph-based models. For example, the template management module 346 is used to generate specific instances of nodes from predefined templates. That is, the template management module 346 ensures ontology integrity by enforcing the structure and rules of a template when generating instances of the template at runtime. As such, the template management module 346 is communicatively coupled (i.e., connected either directly or indirectly) to one or more nodes and/or one or more overlays within the templated executable graph-based model 302.

The neural network management module 348 performs operations in relation to neural network processing implemented by the system 300. According to an embodiment of the present disclosure, a neural network and its associated functionality may be wrapped within an overlay node and coupled with one or more nodes of an executable graph based model to imbue the one or more nodes with the functionality of the neural network. The neural network management module 348 utilizes a number of services (e.g., a graph service, an algorithm service, an engine/mesh processing service, a session service, and/or a training service) to process the neural network and store the outcome of the service against the object (e.g., the one or more nodes) for which the neural network overlay is applied.

The graph service of the neural network management module 348 is used to define the overlay structure for the neural network. The neural network overlay structure is built using the full capabilities associated with defining an overlay structure and executing processing logic in situ using overlays, with the addition of specific overlay structure objects that are needed to support neural network processing. By designing the neural network using an overlay structure the neural network overlay structure can be implemented as a fully operational overlay system and not just a visual means of representing the neural network structure as a byproduct of the network information that is fed into the mathematical neural network algorithms for execution.

The neural network algorithms service of the neural network management module 348 is responsible for performing the processing logic associated with the neural network defined in the neural network management module 348. The neural network algorithms service processes the information in the neural network graph service and provides the mathematical interpretation of the solution needed for execution. In one embodiment, the neural network algorithms service utilizes parallel processing to determine the solution needed for execution. Any number of algorithms can be created for the neural network processing without impacting the overall execution of the neural network engine.

The neural network engine/mesh service of the neural network management module 348 is the core service of the neural network management module 348 and is responsible for performing the neural network processing logic using the defined neural network algorithm and the neural network graph. This may be done within the scope of a neural network session.

The neural network session service is responsible for creating a unique neural network session for each unique neural network determination since the same neural network processing logic can be concurrently executed for one or more overlay structure instances. That is, the neural network management module 348 is primarily designed for an overlay structure template and the template is then executed against an instance of the overlay structure associated to the template. A neural network session based on the problem space can be implemented as either: a) a single execution instance - where all instance state is available at the time of neural network processing); or b) a re-enterable execution instance - where instance state may be provided over the course of multiple interactions with the neural network management module 348 or on a need to have basis as in the case of a neural network mesh.

The neural network training service of the neural network management module 348 is responsible for providing the associated solutions for training a defined neural network mesh or associated neural networks withing the system 300. While training a neural network is a fundamental part of the neural network processing - training can be implemented internally or externally to the neural network management module 348. That is, the neural network could be: a) designed and trained external to the system 300 and then integrated as part of the system 300; or b) the entire design and training processes can be implemented within the system 300.

The contract management module 350 manages scope and contracts within the executable graph-based model 302. As will be described in more detail below, any content within the executable graph-based model 302 can be defined with a scope of "public", "private", or "protected". Contracts restrict access to portions of the executable graph-based model 302 to the access scope and security privileges defined by the contract and any associated security overlays. The contract management module 350 enables content within the executable graph-based model 302 to be marked with a restricting scope (e.g., "public", "private", etc.) thereby restricting access to those users who have the appropriate credentials sourced from information in the context 336. The contract management module 350 then provides secured access to the relevant portion(s) of the executable graph-based model 302 via one or more contracts that configure the security (user roles and associated privileges) using overlays. As such, the contract management module 350 can be considered an extension of, or coordinator with, the security module 322 to manage user access based on contracts and the received context 336 and stimuli 340. The contract management module 350 is communicatively coupled (i.e., connected either directly or indirectly) to one or more nodes and/or one or more overlays within the executable graph-based model 302.

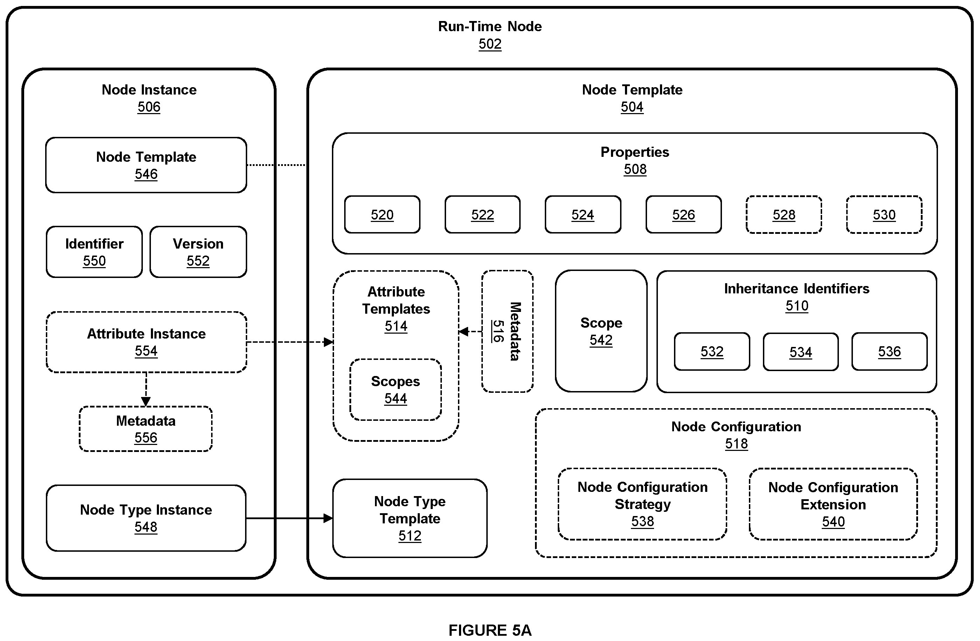

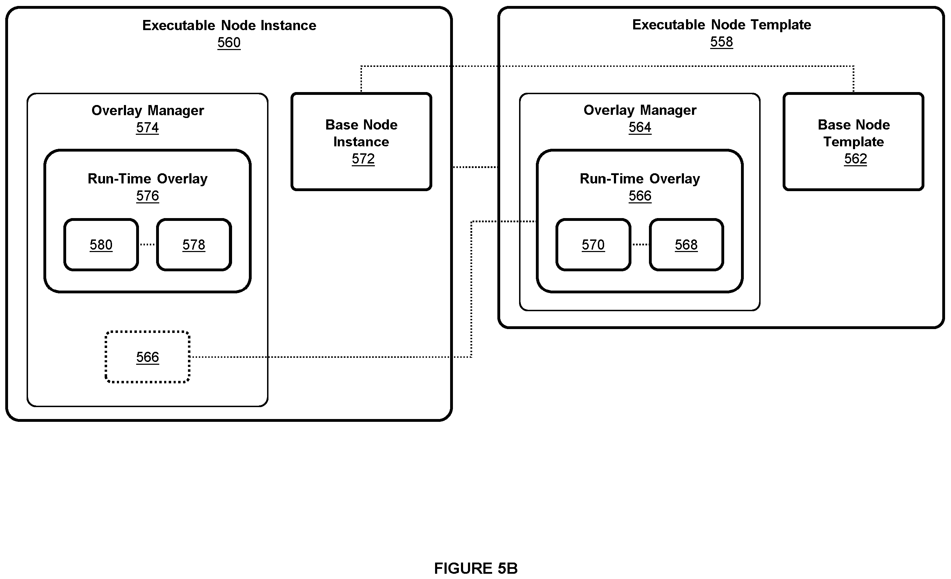

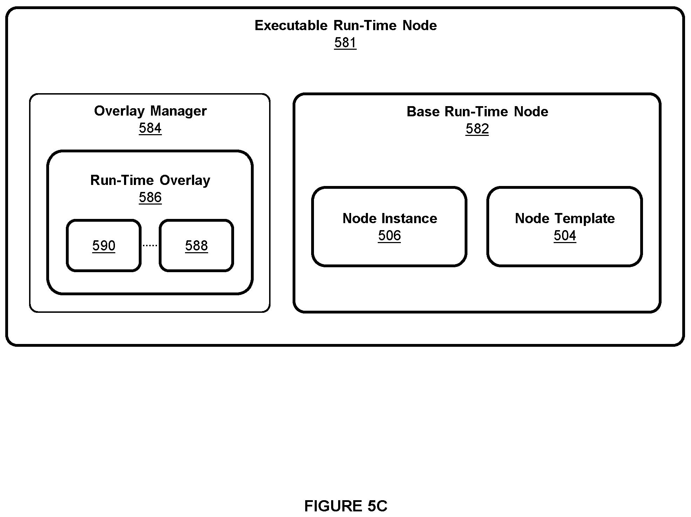

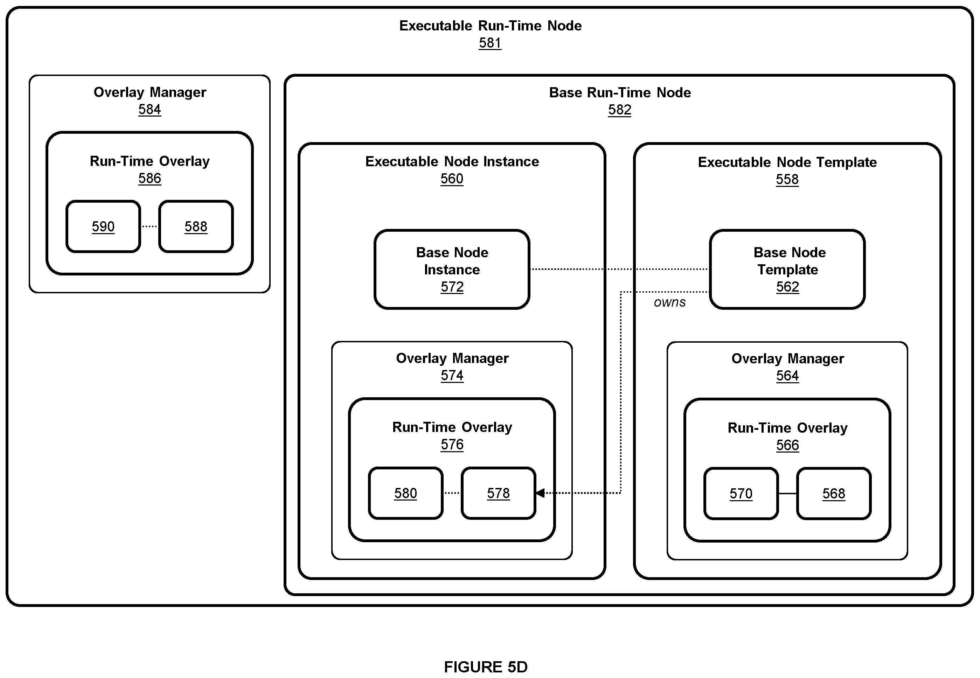

Having now described the system 300 for executing and managing executable graph-based models, the description will now turn to the elements of an executable graph-based model; specifically, the concept of a node. Unlike conventional graph-based systems, all objects (e.g., data, overlays, etc.) within the executable graph-based model (e.g., the executable graph-based model 302) are implemented as nodes. As will become clear, this allows executable graph-based models to be flexible, extensible, and highly configurable. In addition, the system 300 described above supports templating of a node such that multiple instances of a node template may be generated to form multiple runtime nodes (as described in relation to Figure 5 below).

Figure 4A shows the general structure of a node 402 within an executable graph-based model, such as the executable graph-based model 302 shown in Figure 3, according to an embodiment of the present disclosure.

Figure 4A shows a node 402 which corresponds to the core structure of an executable graph-based model (e.g., the executable graph-based model 302 shown in the system 300 of Figure 3) and which forms the foundational building block for all data and data processing logic within the executable graph-based model. The node 402 comprises properties 404, inheritance identifiers 406, and node type 408. The node 402 optionally comprises one or more attributes 410, metadata 412, a node configuration 414. The properties 404 of the node 402 include a unique identifier 416, a version identifier 418, a namespace 420, and a name 422. The properties 404 optionally include one or more icons 424, one or more labels 426, and one or more alternative identifiers 428. The inheritance identifiers 406 of the node 402 comprise an abstract flag 430, a leaf flag 432, and a root flag 434. The node configuration 414 optionally comprises one or more node configuration strategies 436 and one or more node configuration extensions 438. Figure 4A further shows a plurality of predetermined node types 440 which include a data node type 442, an overlay node type 444, an edge node type 446, a role node type 447, a container node type 448, and a contract node type 450. According to an embodiment of the present disclosure, the node 402 further comprises a scope 452 and the one or more attributes 410 comprise one or more scopes 454.

The unique identifier 416 is unique for each node within an executable graph-based model. The unique identifier 416 is used to register, manage, and reference the node 402 within the system (e.g., the system 300 of Figure 3). In some embodiments, the one or more alternative identifiers 428 are associated with the unique identifier 416 to help manage communications and connections with external systems (e.g., during configuration, sending stimuli, or receiving outcomes). The version identifier 418 of the node 402 is incremented when the node 402 undergoes transactional change. This allows the historical changes between versions of the node 402 to be tracked by modules or overlays within the system. The namespace 420 of the node 402, along with the name 422 of the node 402, is used to help organize nodes within the executable graph-based model. That is, the node 402 is assigned a unique name 422 within the namespace 420 such that the name 422 of the node 402 need not be unique within the entire executable graph-based model, only within the context of the namespace 420 to which the node 402 is assigned.

The node 402 optionally comprises one or more icons 424 which are used to provide a visual representation of the node 402 when visualized (e.g., by the visualization module 324 of the system 300 shown in Figure 3). The one or more icons 424 can include icons at different resolutions and display contexts such that the visualization of the node is adapted to different display settings and contexts. The node 402 also optionally comprises one or more labels 426 which are used to override the name 422 when the node is rendered or visualized.

The node 402 supports the software development feature of multiple inheritance by maintaining references (not shown) to zero or more other nodes, which then act as the base of the node 402. This allows the behavior and functionality of a node to be extended or derived from one or more other nodes within an executable graph-based model. The inheritance identifiers 406 of the node 402 provide an indication of the inheritance-based information, which is applicable, or can be applicable, to the node 402. The inheritance identifiers 406 comprise a set of Boolean flags which identify the inheritance structure of the node 402. The abstract flag 430 of the inheritance identifiers 406 allows the node 402 to support the construct of abstraction. When the abstract flag 430 takes a value of "true", the node 402 is flagged as abstract meaning that it cannot be instantiated or created within an executable graph-based model. Thus, a node having the abstract flag 430 set to "true" can only form the foundation of another node that inherits from it. By default, the abstract flag 430 of a node is set to "false". The leaf flag 432 of the inheritance identifiers 406 is used to indicate whether any other node can inherit from the node 402. If the leaf flag 432 is set to "true", then no other node can inherit from the node 402 (but unlike an abstract node, a node with a leaf flag set can still be instantiated and created within an executable graph-based model). The root flag 434 of the inheritance identifiers 406 is used to indicate whether the node 402 inherits from any other node. If the root flag 434 is set to "true", then the node 402 does not inherit from any other node. The node 402 is flagged as leaf (i.e., the leaf flag 432 is set to "true") and/or root (i.e., the root flag 434 is set to "true"), or neither (i.e., both the leaf flag 432 and the root flag 434 are set to "false"). The skilled person will appreciate that a node cannot be flagged as both abstract and leaf (i.e., the abstract flag 430 cannot be set to "true" whilst the leaf flag 432 is set to "true").

As stated above, all elements of the executable graph-based model are defined as nodes. This functionality is in part realized due to the use of a node type. The node type 408 of the node 402 is used to extend the functionality of the node 402. All nodes within an executable graph-based model comprise a node type which defines additional data structures and implements additional executable functionality. A node type thus comprises data structures and functionality that is common across all nodes which share that node type. The composition of a node with a node type therefore improves extensibility by allowing the generation of specialized node functionalities for specific application areas. Such extensibility is not present in prior art graph-based models. As illustrated in Figure 4A, the node 402 and the node type 408 are one logical unit which are not separated in the context of an executing system at runtime (i.e., in the context of execution of an executable graph-based model).

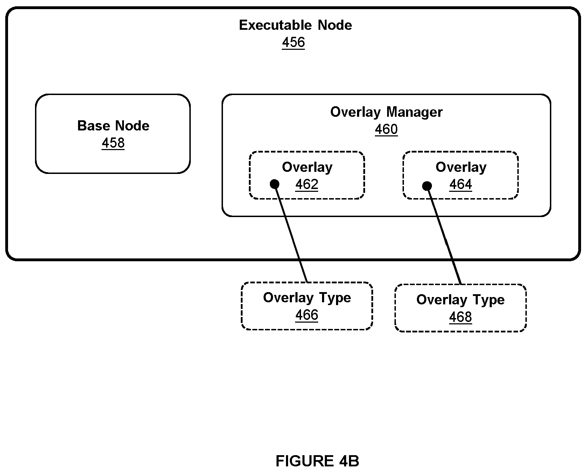

Figure 4A shows the plurality of predetermined node types 440 which provides a non-exhaustive list of node types which can be associated with a node, such as the node 402. The data node type 442 (also referred to as a vertex or vertex node type) comprises common data structure and functionality related to the "things" modelled in the graph-i.e., the data. The overlay node type 444 is used to extend the functionality of a node, such as the node 402, to incorporate processing logic (as will be described in more detail below in relation to Figure 4B).

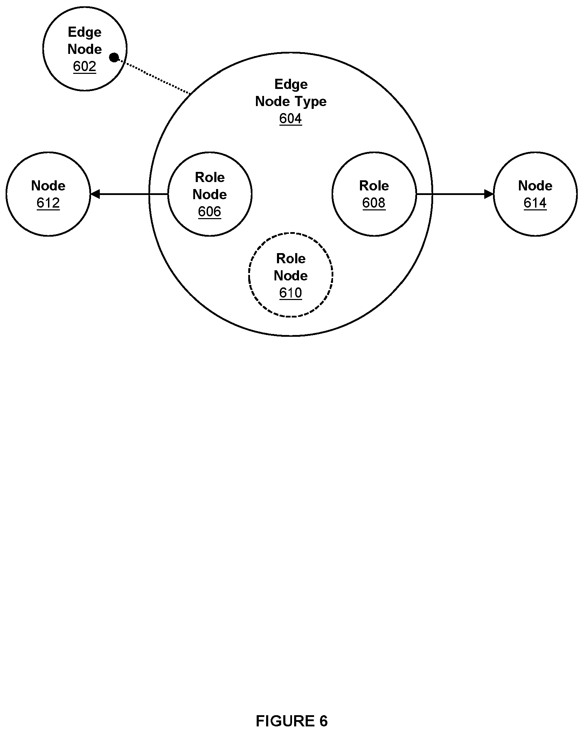

The edge node type 446 comprises common data structures and functionality related to joining two or more nodes. A node having the edge node type 446 can connect two or more nodes and thus the edge node type 446 constructs associations and connections between nodes (for example objects or "things") within the executable graph-based model. The edge node type 446 is not restricted to the number of nodes that can be associated or connected by a node having the edge node type 446. The data structures and functionality of the edge node type 446 thus define a hyper-edge which allows two or more nodes to be connected through a defined set of roles. As will be described in more detail below, a role which defines a connective relationship involving an edge is either a (standard) role, as is known within standard hyper-graph theory such that the role merely defines a connection between the edge and another node, or the role is a node having the role node type 447. These concepts are illustrated in Figure 6 described below.

The container node type 448 is an example of a group node type. That is, this type extends the functionality of the node 402 by providing a mechanism for grouping related nodes. The container node type 448 comprises an aggregation of related nodes. That is, the container node type 448 encapsulates (comprises or comprises references to) one or more other nodes. Each of these nodes are thus a part of the container defined by the node 402 and the container node type 448 within the corresponding executable graph-based model.

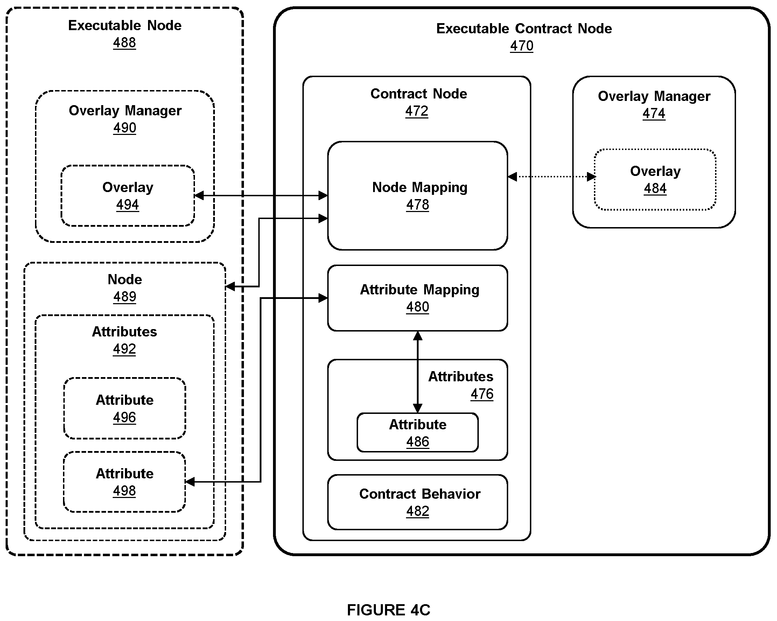

The plurality of predetermined node types 440 shown in Figure 4A further comprise the contract node type 450. As will be described in more detail below in relation to Figures 4C and 6A below, the contract node type 450 is used to define and restrict access to one or more nodes and/or one or more attributes of nodes within a node group (e.g., a container, etc.).

The one or more attributes 410 correspond to the data associated with the node 402 (e.g., the data represented by the node 402 within the executable graph-based model as handled by a data management module such as the data management module 314 of the system 300 shown in Figure 3). Because not all nodes within an executable graph-based model is associated with data, a node need not have any attributes. Each of the one or more attributes 410 are stored in any suitable format such as a data triplet of name, value type, and value.

The node 402 optionally comprises metadata 412 (e.g., data stored as a name, value type, and value triplet) which is associated with either the node 402 or one or more of the one or more attributes 410 of the node 402.

The node configuration 414 provides a high degree of configurability for the different elements of a node. The node configuration 414 optionally comprises one or more node configuration strategies 436 and/or one or more node configuration extensions 438 which are complex data types. An example of a concrete node configuration strategy is an identifier strategy, associated with the configuration of the unique identifier 416 of the node 402, which creates Snowflake identifiers. A further example of a concrete node configuration strategy is a versioning strategy, associated with the configuration of the version identifier 418 of the node 402, which supports major and minor versioning (depending on the type of transactional change incurred by the node 402).

According to an embodiment of the present disclosure, both the node 402 and the one or more attributes 410 of the node 402 (if the node comprises attributes) are scoped. That is, the node 402 comprises the scope 452 and the one or more attributes 410 comprise the one or more scopes 454 (i.e., each of the one or more attributes 410 comprises a corresponding scope within the one or more scopes 454). Scopes which may be assigned to either the scope 452 or each of the one or more scopes 454 include "public" scope, "private" scope, and "protected" scope, the definitions of which align with standard software development practices and terminology. The effects of different scopes on the node 402 and the one or more attributes 410 are described in more detail below.

The structure and functionality of the node 402 (as described above) can be dynamically extended using the concept of an executable node. As described in relation to Figure 4B below, an executable node provides processing functionality (i.e., processing logic) for a base node via one or more associated overlay nodes.

Figure 4B shows an executable node 456 according to an embodiment of the present disclosure.

The executable node 456 comprises a base node 458 and an overlay manager 460. The overlay manager 460 registers and maintains one or more overlay nodes associated with the base node 458, such as the first overlay node 462 and the second overlay node 464. The first overlay node 462 has a first overlay node type 466 and the second overlay node 464 has a second overlay node type 468.

The executable node 456 is itself a node; that is, the executable node 456 extends the node 402 (or is a subtype of the node 402) such that all the functionality and properties of the node 402 extend to the executable node 456. The executable node 456 also dynamically extends the functionality of the base node 458 by associating the overlays maintained by the overlay manager 460 with the base node 458. The executable node may thus be considered a composition of a base node and an overlay node and may alternatively be referred to as a node with overlay. For example, the base node 458 may have a data node type associated with a user, and the overlay manager 460 may comprise an encryption overlay which has processing logic that encrypts the attribute values of the base node 458 (e.g., the values of the one or more attributes 410 shown in Figure 4A) prior to the values being saved or output from the system. Therefore, the executable node 456 acts as a decorator of the base node 458 adding the functionality of the overlay manager 460 to the base node 458.

The skilled person will appreciate that the base node 458 refers to any suitable node within an executable graph-based model. As such, the base node 458 can be a node having a type such as a data node type (e.g., the data node type 442 shown in Figure 4A), an overlay node type (e.g., the overlay node type 444 shown in Figure 4A), or the like. Alternatively, the base node 458 can itself be an executable node such that the functionality of the base (executable) node 458 is dynamically extended. In this way, complex and powerful processing functionality can be dynamically generated by associating and extending overlay nodes.

The overlay manager 460 registers and maintains one or more overlay nodes associated with the base node 458, such as the first overlay node 462 and the second overlay node 464. The assignment of an overlay node to a base node (via the overlay manager 460) endows the base node with processing logic and executable functionality defined within the overlay node. Extending the functionality of a base node through one or more overlay nodes is at the heart of the dynamic generation of executable graph-based models according to an embodiment of the present disclosure. As illustrated in Figure 2 above, the data (e.g., a data node as represented by the base node 458 in Figure 4B) and the functionality which acts upon that data (e.g., an overlay node) can be separated and independently maintained offline, but at runtime, an association between the data node and the overlay node is determined and an executable node is generated (e.g., the executable node 456 shown in Figure 4B).

An overlay node, such as the first overlay node 462 or the second overlay node 464, is a node having an overlay node type (alternatively referred to as an overlay type) assigned to its node type. As shown in Figure 4B, the first overlay node 462 has the first overlay node type 466 and the second overlay node 464 has the second overlay node type 468. Different overlay node types are used to realize different functionality. Example overlay node types include an encryption overlay node type, an obfuscation overlay node type, an audit overlay node type, a prediction overlay node type, and the like. For example, if the first overlay node type 466 is an obfuscation node type and the second overlay node type 468 is an encryption node type then the functionality of the base node 458 is extended to provide obfuscation and encryption of attribute values of the base node 458. The skilled person will appreciate that the list of overlay types is in no way exhaustive and the number of different overlay types that can be realized is not limited. Because an overlay node is itself a node, all functionality of a node described in relation to the node 402 of Figure 4A is thus applicable to an overlay node. For example, an overlay node comprises a unique identifier, a name, etc., can have attributes (i.e., an overlay node can have its own data defined), supports multiple inheritance, and can be configured via node configurations. Furthermore, because an overlay node is a node, the overlay node can have one or more overlay nodes associated therewith (i.e., the overlay node is an overlay with overlay node). Moreover, the processing functionality of an overlay node extends to the node type of the node to which the overlay node is applied.

An overlay node, such as the first overlay node 462 or the second overlay node 464, is not bound to a single executable node or a single executable graph-based model (unlike nodes which have non-overlay node types). This allows overlay nodes to be centrally managed and reused across multiple instances of executable graph-based models.

Unlike non-overlay nodes, an overlay node comprises processing logic (not shown in Figure 4B) which determines the functionality of the overlay node. The processing logic of an overlay node comprises a block of executable code, or instructions, which carries out one or more operations. The block of executable code is pre-compiled code, code which requires interpretation at runtime, or a combination of both. Different overlay nodes provide different processing logic to realize different functionality. For example, an encryption overlay node comprises processing logic to encrypt the data (i.e., attributes) of a data node associated with the encryption overlay node, whilst an auditing overlay node comprises processing logic to record changes to the nodes state of a node associated with the auditing overlay node.

The overlay manager 460 of the executable node 456 is responsible for executing all overlays registered with the overlay manager 460. The overlay manager 460 also coordinates execution of all associated overlay nodes. In the example shown in Figure 4B, the executable node 456 associates the base node 458 with two overlay nodes-the first overlay node 462 and the second overlay node 464. Thus, the overlay manager 460 employs a strategy to manage the potentially cascading execution flow. Example strategies to manage the cascading execution of overlays include the visitor pattern and the pipe and filter pattern. Further examples include strategies which apply either depth-first or depth-first processing patterns, a prioritization strategy, or a combination thereof. All execution strategies are defined and registered with the overlay manager 460 and are associated with an overlay via a node configuration extension for the overlay.

According to an embodiment of the present disclosure, access to nodes and executable nodes within an executable graph-based model can be controlled using a contract node (otherwise referred to as a contract) as shown in Figure 4C.

Figure 4C shows the structure of an executable contract node 470 according to an embodiment of the present disclosure.

The executable contract node 470 is an executable node and has a contract node 472, and an overlay manager 474. The contract node 472 is a node having a contract node type (i.e., the contract node type 450 shown in Figure 4A) and comprises one or more attributes 476. The contract node type of the contract node 472 comprises a node mapping 478, an attribute mapping 480, and a contract behavior 482. The node mapping 478, the attribute mapping 480, and the contract behavior 482 are a part of the contract node type but are shown in Figure 4C as part of the contract node 472 for brevity and ease of reference. The overlay manager 474 of the executable contract node 470 comprises a first overlay 484. The one or more attributes 476 of the contract node 472 comprise a first attribute 486.

Figure 4C further shows a target executable node 488 which is an executable node comprising a target base node 489 and an overlay manager 490. The target base node 489 comprises one or more attributes 492. The overlay manager 490 comprises a target overlay 494. The one or more attributes 492 comprises a non-target attribute 496 and a target attribute 498. The target executable node 488 is public and the target attribute 498 is public (i.e., they both have "public" scope). The target executable node 488 is within a node group (not shown) which can be either public, private, or protected.

The contract node 472 comprises all of the structure and functionality of a node as described above in relation to the node 402 shown in Figure 4A. The skilled person will appreciate that this structure and functionality (e.g., properties, scope, etc.) has been omitted from the representation in Figure 4C for brevity. The contract node type (not shown) is used to define and restrict access to nodes and/or attributes within a node group (e.g., a container, etc.) using the node mapping 478 and the attribute mapping 480.

At a general level, the executable contract node 470 acts as a proxy for functionality and data associated with the target base node 489 and/or the target executable node 488 from requests outside of the node group within which the target executable node 488 is contained. Whilst the following description focusses on a scenario involving an executable contract node, the skilled person will appreciate that the description is applicable to a scenario involving a non-executable contract node (e.g., a scenario involving only the contract node 472 and the target base node 489). The executable contract node 470 does not directly expose the functionality and data of the target executable node 488. Indeed, calls made to the executable contract node 470 need not know that the target executable node 488 exists. Rather, the executable contract node 470, via the node mapping 478 and/or the attribute mapping 480 of the contract node 472, replicates the functionality and data of the target executable node 488. Nodes outside of the group containing the target executable node 488 need not know that either the target executable node 488, or the target base node 489, or the target attribute 498, exist since they are exposed via the executable contract node 470.

The node mapping 478 (alternatively referred to as a node access) maps to one or more public nodes within a node group such as a container. In Figure 4C, the node mapping 478 maps to the target base node 489 which is a public node within a node group (which can be public, private, or protected). In one embodiment, the node mapping 478 also exposes the overlays that are associated with the target base node 489 via the target executable node 488 by mapping, at runtime, the target overlay 494 of the target executable node 488 to the overlay manager 474 of the executable contract node 470. In another embodiment, a dedicated overlay mapping of the contract node type performs the functionality regarding overlay mappings. In the example shown in Figure 4C, the first overlay 484 associated with the executable contract node 470 is a representation of the target overlay 494 mapped at runtime from the target executable node 488 by the node mapping 478. Therefore, the executable contract node 470 replicates the functionality of the target executable node 488-as defined in the target overlay 494-through the use of the node mapping 478. Nodes outside of the node group which contains the target executable node 488 are thus able to utilize this functionality via the executable contract node 470 without the target executable node 488 being exposed. The node mapping 478 may also map other structures or functionality of the target base node 489 to the contract node 472. For example, the node mapping 478 may also map the functionality (overlays) and data (attributes) of a node to the contract node 472 thereby fully replicating the node.

The attribute mapping 480 (alternatively referred to as an attribute access) maps to one or more public attributes of a public node in a node group. In Figure 4C, the attribute mapping 480 provides access to the target attribute 498 of the target base node 489. The target attribute 498 is an attribute of the target base node 489 having public scope. The contract node 740 does not directly expose (i.e., provide direct access to) the target attribute 498. Rather, the attribute mapping 480 maps from the target attribute 498 of the target base node 489 to the first attribute 486 of the contract node 472. As such, the first attribute 486 is a proxy for the target attribute 498 and allows nodes outside of the node group containing the target base node 489 to access the target attribute 498, albeit indirectly, without the target attribute 498 being exposed.

Both the node mapping 478 and the attribute mapping 480 can be implemented hierarchically, addressing the case where the executable contract node 470 may be inherited or where the access can be defined once and reused.

The contract behavior 482 defines functionality related to the contract node 472 which allows specific contract implementations to be created. That is, different contract behaviors may be available to be incorporated into a contract to modify the behavior of the contract. For example, a ledger contract behavior can utilize a blockchain, or other distributed ledger solution, to ensure adherence to contract rules and track the nodes that have been accessed via the contract type.

Figure 5A shows the general structure of a runtime node 502 according to an embodiment of the present disclosure.

The runtime node 502 comprises a composition of a node template 504 and a node instance 506 generated according to the node template 504. The runtime node 502 shown in Figure 5A is a compositional structure which is generated, and executed, at runtime as part of a templated (template-based or template-driven) executable graph-based model. That is, whilst the node template 504 is defined "offline", the node instance 506 and runtime node 502 are runtime structures which are dynamically generated during execution of a templated executable graph-based model.

The node template 504 comprises properties 508, inheritance identifiers 510, and node type template 512. The node template 504 optionally comprises attribute templates 514, metadata 516, and a node configuration 518. The properties 508 of the node template 504 include a unique identifier 520, a version identifier 522, a namespace 524, and a name 526. The properties 508 optionally include one or more icons 528 and one or more labels 530. The inheritance identifiers 510 of the node template 504 comprise an abstract flag 532, a leaf flag 534, and a root flag 536. The node configuration 518 optionally comprises one or more node configuration strategies 538 and one or more node configuration extensions 540. The node template further comprises a scope 542 and the attribute templates 514 comprise one or more scopes 544. The node instance 506 comprises a node template 546 and a node type instance 548. The node instance 506 also comprises properties including a unique identifier 550 and a version identifier 552. The node instance 506 optionally comprises attribute instances 554 and metadata 556.

The node template 504 and the node instance 506 form the foundation for all objects within a template-driven executable graph-based model. The node template 504 defines all the structural and behavioral embodiments of an ontology. That is, the node template 504 defines what is allowed for the runtime node 502 when generated as part of an executable graph-based model. The node template 504 may thus be considered to comprise a predetermined node structure and define one or more rules which govern generation of node instances which are based on the node template 504. The node instance 506 is the actual instance implementation of the node template 504 (and its corresponding definitions) for the runtime node 502. That is, the node instance 506 is generated according to the predetermined node structure and one or more rules of the node template 504. Every node instance is associated with a node template; but a node template need not be associated with a node instance. As shown in Figure 5A, the node instance 506 is associated with a single node template (i.e., the node template 504), but the node template 504 may be associated with zero or more node instances. The node template 504 is mutable in the context of template management (e.g., when part of an "offline" graph-based model or structure) but is immutable (read only) when used as part of the runtime node 502 during execution-i.e., during execution, only the node instance 506 of the runtime node 502 may be modified. The runtime node 502 may be represented as a façade which encapsulates the data and capabilities of the node template 504 and the node instance 506 and delegates responsibilities accordingly. That is, the runtime node 502 does not contain any data, and does not perform any of the capabilities, directly.

The unique identifier 520 is unique for each node template within an executable graph-based model. Similarly, the unique identifier 550 is unique for each node instance within an executable graph-based model. That is, a node instance does not share the identifier of its associated node template. The unique identifier 520 and the unique identifier 550 are used to register, manage, and reference the node template 504 and the node instance 506 within the system (e.g., the system 300 of Figure 3). The version identifier 522 of the node template 504 is incremented when the node template 504 undergoes transactional change. Similarly, the version identifier 552 of the node instance 506 is incremented when the node instance 506 undergoes transitional change. This allows the historical changes between versions of the node template 504 and/or the node instance 506 to be tracked by modules or overlays within the system. The namespace 524 of the node template 504, along with the name 526 of the node template 504, is used to help organize node templates within the executable graph-based model. That is, the node template 504 is assigned a unique name 526 within the namespace 524 such that the name 526 of the node template 504 need not be unique within the entire executable graph-based model, only within the context of the namespace 524 to which the node template 504 is assigned.

The node template 504 optionally comprises one or more icons 528 which are used to provide a visual representation of the node template 504 when visualized (e.g., by the visualization module 324 of the system 300 shown in Figure 3). The one or more icons 528 can include icons at different resolutions and display contexts such that the visualization of the node is adapted to different display settings and contexts. The node template 504 also optionally comprises one or more labels 530 which are used to override the name 526 when the node template is rendered or visualized.

The node template 504 supports the software development feature of multiple inheritance by maintaining references (not shown) to zero or more other node templates, which then act as the base of the node template 504. This allows the behavior and functionality of a node template to be extended or derived from one or more other node templates within an executable graph-based model. The node instance 506 likewise supports multiple inheritance because it is an instance representation of the node template 504. The multiple inheritance structure of the node instance 506 is, however, limited to the corresponding instance realization of the multiple inheritance structure defined by the node template 504-i.e., one node instance is created and managed for each node template defined in the inheritance hierarchy for a node instance of a node template. The inheritance identifiers 510 of the node template 504 provide an indication of the inheritance-based information, which is applicable, or can be applicable, to the node template 504. The inheritance identifiers 510 comprise a set of Boolean flags which identify the inheritance structure of the node template 504. The abstract flag 532 of the inheritance identifiers 510 allows the node template 504 to support the construct of abstraction. When the abstract flag 532 takes a value of "true", the node template 504 is flagged as abstract meaning that it cannot be instantiated or created within an executable graph-based model. Thus, a node template having the abstract flag 532 set to "true" can only form the foundation of another node template that inherits from it. By default, the abstract flag 532 of a node template is set to "false". The leaf flag 534 of the inheritance identifiers 510 is used to indicate whether any other node template can inherit from the node template 504. If the leaf flag 534 is set to "true", then no other node template can inherit from the node template 504 (but unlike an abstract node, a node template with a leaf flag set can still be instantiated and created within an executable graph-based model). The root flag 536 of the inheritance identifiers 510 is used to indicate whether the node template 504 inherits from any other node template. If the root flag 536 is set to "true", then the node template 504 does not inherit from any other node template. The node template 504 is flagged as leaf (i.e., the leaf flag 534 is set to "true") and/or root (i.e., the root flag 536 is set to "true"), or neither (i.e., both the leaf flag 534 and the root flag 536 are set to "false"). The skilled person will appreciate that a node template cannot be flagged as both abstract and leaf (i.e., the abstract flag 532 cannot be set to "true" whilst the leaf flag 534 is set to "true").

All elements of a templated executable graph-based model are defined as nodes-node templates or node instances. This functionality is in part realized due to the use of a node type. In general, a node type imbues a node template/instance with common data structures and/or functionality such that all node templates/instances having that node type share the common data structures and/or functionality. A node type comprises two components: a node type template (e.g., the node type template 512) and a corresponding node type instance (e.g., the node type instance 548), which is an implementation of the node type template. This enables multiple implementations of a template's core structure and functionality to be realized. Each node template comprises a single node type template. Similarly, each node instance comprises a single node type instance associated with a node type template. That is, a node type instance, associated with a node instance, is associated with a node type template of a node template for the node instance.

The node type template 512 of the node template 504 is used to extend the functionality of the node template 504 by defining the standard set of capabilities, including data and associated behavior, for the specialized node type it will represent. For example, a node type template associated with a data node type will define the standard capabilities for the node template (and corresponding node instance) which take this node type. The node type instance 548 is an instance of the node type template 512 definition and holds any instance data or instance specific behavior. Example node types include a data node type, a value node type, and an overlay node type. As will be described in more detail below, the overlay node type is used to extend the functionality of a node to incorporate default data-oriented processing logic.

The attribute templates 514 correspond to the data defined by the node template 504. For example, the attribute templates 514 may define the names and value types (e.g., integer, string, float, etc.) of one or more attributes but not the values of these attributes. The values of the attribute templates 514 may be defined by the attribute instances 554 of the node instance 506 through one or more values or instance values. For example, a node template may define a string attribute "surname" and a corresponding node instance may assign the instance value "Bell-Richards" to this string attribute. Each attribute instance is associated with an attribute template. The node template 504 may define one or more default values for the attribute templates 514. The default values correspond to the values that the attributes take if no value is assigned. The node template 504 also optionally comprises metadata 516 (e.g., data stored as a name, value type, and value triplet) which is associated with either the node template 504 or one or more of the attribute templates 514 of the node template 504. Similarly, the node instance 506 also optionally comprises metadata 556 (e.g., data stored as a name, value type, and value triplet) which is associated with either the node instance 506 or one or more of the attribute instances 554.

The node configuration 518 provides a high degree of configurability for the different elements of a node template and/or a node instance. The node configuration 518 optionally comprises one or more node configuration strategies 538 and/or one or more node configuration extensions 540. An example of a concrete node configuration strategy is an identifier strategy, associated with the configuration of the unique identifier 520 of the node template 504 and/or the configuration of the unique identifier 550 of the node instance 506, which creates Snowflake identifiers. A further example of a concrete node configuration strategy is a versioning strategy, associated with the configuration of the version identifier 522 of the node template 504 and/or the version identifier 552 of the node instance 506, which supports major and minor versioning (depending on the type of transactional change incurred).

According to an embodiment of the present disclosure, the structure and functionality of the runtime node 502, the node template 504, and/or the node instance 506 can be dynamically extended using the concept of overlays to generate executable nodes-i.e., executable runtime nodes, executable node templates, and executable node instances. As described in relation to Figures 5B-5D below, executable nodes provide processing functionality (i.e., processing logic) for a base node, such as a runtime node, a node template, or a node instance, via one or more associated overlays.

Figure 5B shows an executable node template 558 and an executable node instance 560 according to an embodiment of the present disclosure.

The executable node template 558 comprises a base node template 562 and an overlay manager 564. The overlay manager 564 maintains one or more runtime overlays such as the first runtime overlay 566 which comprises a first overlay template 568 and a first overlay instance 570. The executable node instance 560 comprises a base node instance 572 and an overlay manager 574. The overlay manager 574 maintains one or more runtime overlays such as the second runtime overlay 576 which comprises the second overlay template 578 and the second overlay instance 580. In the example shown in Figure 5B, the second overlay template 578 is owned by the base node template 562 (the skilled person will appreciate that this ownership relation exists but is not shown in Figure 5B for brevity).

The executable node instance 560 is associated with (i.e., is an instance of) the executable node template 558 and the base node instance 572 is associated with (i.e., is an instance of) the base node template 562. These relationships are indicated by the dashed connecting lines in Figure 5B. Moreover, the overlay manager 574 of the executable node instance 560 maintains a reference to the first runtime overlay 566 associated with the executable node template 558, if the executable node template 558 acts on instance information contained in the executable node instance 560. For example, the executable node template 558 may be an encryption overlay with the encryption defined by the first overlay template 568 and with specified encryption settings defined by the first overlay instance 570. In such an example, the first runtime overlay 566 is applied to the processing of attribute instances associated to the base node instance 572. Alternatively, if the first runtime overlay 566 acts only on the base node template 562 structure (void of a corresponding instance) then there is no need for the overlay manager 574 to hold a reference to the first runtime overlay 566.

The executable node template 558 and the executable node instance 560 dynamically extend the functionality of the base node template 562 and the base node instance 572 by associating the runtime overlays registered with the respective overlay managers with the base nodes (i.e., the base node template 562 and the base node instance 572). As will be described in more detail below, a runtime overlay is used to extend the functionality of a node to incorporate processing logic defined within the runtime overlay. Thus, the first runtime overlay 566 extends the functionality of the base node template 562 by incorporating processing logic, defined within the first runtime overlay 566, such that the processing logic interacts with the base node template 562 at runtime (e.g., for template building or processing performed outside of an associated node instance). Similarly, the second runtime overlay 576 extends the functionality of the base node instance 572 by incorporating processing logic, defined within the second runtime overlay 576, such that the processing logic interacts with the base node instance 572 and/or the base node template 562 at runtime. Here, processing logic corresponds to any suitable executable or interpretable code or software component. The processing logic may be expressed in a variety of software languages such as C, C++, Java, Ruby, Visual Basic, Python, and/or other object-oriented, procedural, or other programming language.

The executable node template 558 and the executable node instance 560 are dynamic structures which are generated during execution of a templated executable graph-based model. During execution, an overlay manager connected to an executable node template or instance is operable to receive and process stimuli (e.g., messages or events sent from other components within the system) and trigger the processing logic of one or more runtime overlays maintained by the overlay manager. The overlay manager of an executable node template handles template only stimuli or requests, whilst the overlay manager of an executable node instance handles instance only stimuli or requests.

The executable node template 558 may comprise one or more runtime overlays which are associated only with the base node template 562 and are not used or loaded for instance processing (i.e., they are not used or loaded with respect to the base node instance 572). As such, the overlay manager 564 may comprise a runtime overlay (not shown) which is not referenced by the overlay manager 574 of the executable node instance 560 but is used in the construction of the template definition. For example, the runtime overlay may be a validation overlay used to ensure that the base node template 562 is validly generated.

Each runtime overlay is itself a runtime node composed of a node template and a node instance which have an overlay node type. An overlay template is a node template having an overlay node type template and an overlay instance is a node instance which corresponds to a specific implementation of the overlay template (e.g., within the context of the runtime node 502 of Figure 5A, the node type template 512 of the node template 504 is an overlay type template and the node type instance 548 of the node instance 506 is an implementation of the overlay type template defined by the node type template 512). The overlay template comprises one or more generic rules which may be implemented by the processing logic of the overlay instance. For example, a rule may be defined in an overlay template specifying that hashing algorithm is to be used and an overlay instance related to the overlay template provides a specific implementation of a hashing algorithm (e.g., MD5, SHA-1, SHA-2, etc.). The overlay template itself may further comprise processing logic or derive additional data maintained by the overlay instance portion. As such, the overlay node type extends a node template or instance by allowing processing logic or additional data to be defined and linked to the node template or instance.

Figure 5C shows an executable runtime node 581 according to an embodiment of the present disclosure.

The executable runtime node 581 comprises a base runtime node 582 and an overlay manager 584. The base runtime node 582 corresponds to the runtime node 502 shown in Figure 5A and comprises a composition of the node template 504 and the node instance 506. The overlay manager 584 maintains one or more runtime overlays including a third runtime overlay 586 which comprises a third overlay template 588 and a third overlay instance 590.

The executable runtime node 581 is generated at runtime and dynamically extends the functionality of the base runtime node 582-i.e., the functionality of the node template 504 and/or the node instance 506-by associating the runtime overlays managed by the overlay manager 584 with the base runtime node 582. As such, the third runtime overlay 586 is operable to interact at runtime with the node template 504 and/or the node instance 506 of the base runtime node 582.

In the example shown in Figure 5C, the node template 504 and the node instance 506 are not executable nodes. That is, neither the node template 504 nor the node instance 506 comprise an overlay manager with one or more runtime overlays. However, as described in relation to Figure 5D below, the node template 504 and/or the node instance 506 may themselves be executable nodes thereby extending the functionality, complexity, and configurability of executable runtime nodes.

Figure 5D shows the executable runtime node 581 of Figure 5C but with one or more executable nodes within the base runtime node 582 according to an embodiment of the present disclosure.

The executable runtime node 581 comprises the base runtime node 582 and the overlay manager 584 as described above in relation to Figure 5C. However, as shown in Figure 5D, the base runtime node 582 comprises a composition of the executable node template 558 and the executable node instance 560 shown in Figure 5B. The executable runtime node 581 is generated at runtime and dynamically extends the functionality of the base runtime node 582-i.e., the functionality of the executable node template 558 and/or the executable node instance 560-by associating the runtime overlays managed by the overlay manager 584 with the base runtime node 582 (as shown in Figure 5C).

In general, an overlay template is defined independently of a node template or a node instance and may be associated with one or more node templates or node instances (i.e., based on configuration rules as described below). The corresponding overlay instance associated with each overlay template may also be defined as being created and owned by a node template or a node instance (i.e., based on configuration rules as described below). For example, an executable node template may comprise a runtime overlay which includes both an overlay template and an overlay instance (i.e., an implementation of the node template). In Figure 5D, this is illustrated by the first runtime overlay 566 which comprises both the first overlay template 568 and the first overlay instance 570. As will be described in more detail below, the runtime overlay in such a scenario may be limited to interacting with the structure and/or data of the base node template only (e.g., the base node template 562), or may interact with the structure and/or data of the base node instance (e.g., the base node instance 572). Alternatively, a node template may be associated with an overlay template, but the node instance is implemented or associated with a node instance. That is, the runtime overlay involving the node template is generated in conjunction with the node instance. In Figure 5D, this is illustrated by the second runtime overlay 576 which comprises the second overlay template 578 which is owned (associated) with the base node template 562, as indicated by the dashed arrow, and the second overlay instance 580 which is associated with the base node instance 572.

As such, the construction and generation of an executable runtime node and/or an executable node template based on an overlay template may depend on the specific configuration of the overlay template. More particularly, the creation and generation may depend on ownership relations of the overlay template, scope of processing of the overlay template, and/or association restrictions of the overlay template.

An overlay template may be either owned or shared. If the overlay template is owned by a node template, then the overlay template may only ever be associated with the node template. That is, the overlay template may only be included as part of a runtime overlay associated with an executable node template involving the node template as the base node template. In such a scenario, the overlay template may define specific processing logic or rules associated to the definition(s) provided in the node template which owns the overlay template. If the overlay template is shared, then it can be associated to zero or more node templates or node instances. In this scenario, the node template may have generic processing logic or rules not directly tied to any node template or node instance.

An overlay template may have scope of processing limited to act in relation to the node template, the node instance, or the runtime node (i.e., both the node template and the node instance). For example, if the overlay template is limited to act in relation to the node template, then the processing logic or rules of the overlay template cannot be used to interact with an executable node instance.

An overlay template (if shared) may be restricted to be associated with only node templates, node instances, or runtime nodes (i.e., both node templates and node instances). For example, if the overlay template is restricted to the node template, then a runtime overlay comprising the overlay template cannot be associated with a node instance. Similarly, an overlay template restricted to the node instance cannot be associated with a node template.

Figure 6 illustrates the concept of a hyperedge connecting two or more nodes through a defined set of roles according to an embodiment of the present disclosure.

Figure 6 shows a simplified representation of an edge node 602 which comprises an edge node type 604 (within the context of the example shown in Figure 4A, the edge node 602 corresponds to the node 402 where the node type 408 is the edge node type 446). The edge node type 604 may be alternatively referred to as a hyperedge node type such that the edge node 602 is alternatively referred to as a hyperedge node. The edge node type 604 comprises a plurality of roles which each define a connective relationship involving the edge node 602, e.g., a connective relationship between the edge node 602 and another node. The plurality of roles of the edge node type 604 comprises a first role node 606 and a role 608. The plurality of roles optionally comprises a further role in the form of a second role node 610. The first role node 606 is a node having a role node type (i.e., the role node type 447 shown in Figure 4A) and defines a connective relationship between the edge node 602 and a first node 612. The first role node 606 is owned by the edge node type 604. The role 608 defines a connective relationship between the edge node 602 and a second node 614. The second role node 610 is a node having the role node type and defines a relationship without expressly defining the node to which the edge connects. Whilst the example in Figure 6 shows the edge node type 604 having two, or even three, roles, the number of roles (and thus the number of connections) that an edge node type can have is not so limited.

As stated above, a role defines a connective relationship involving the edge node 602 (via the edge node type 604) and can be either a (standard) role, such as the role 608, or a role node, such as the first role node 606 or the second role node 610. The standard role simply defines a connective relationship between an edge node and another node. Thus, in the example shown in Figure 6, the role 608 defines the connection between the edge node 602 and the second node 614 (via the edge node type 604). A role node is a node having a role node type (i.e., the role node type 447 shown in Figure 4A) and, like the (standard) role, defines a connective relationship involving an edge. However, because a role node is a node, a role node gains the capabilities, functionality, and extensibility of a node (as described in relation to Figure 4A). A role node thus describes a potentially more complex connective relationship than a (standard) role. In the example shown in Figure 6, the first role node 606 defines a connective relationship between the edge node 602 and the first node 612 (via the edge node type 604). Beneficially, by utilizing the first role node 606 to define the connective relationship between the edge node 602 and the first node 612 the capabilities afforded to a node are provided to the first role node 606. For example, one or more overlay nodes can be associated with a role node to imbue the role node with processing logic thus allowing the role node to process data, respond to stimuli, etc. Moreover, a role node need not define a connective relationship to a node, as illustrated by the second role node 610. Because the second role node 610 is itself a node, the second role node 610 encompasses the data structures and functionality of a node thereby avoiding the need to define the connecting node directly.

Having described the general structure of a system for implementing executable graph-based models, and having described the structure and functionality of nodes, overlays, templates, instances, and the like, the description will now turn to the integration of neural networks within an executable graph-based model.

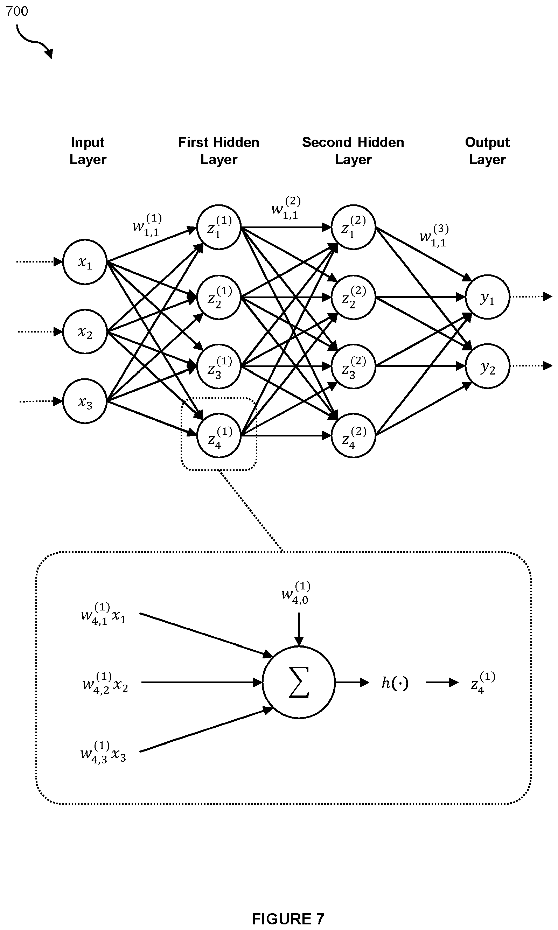

Figure 7 shows an artificial neural network (ANN) 700 as is known in the art.

In general, the ANN 700 applies a series of functional transformations to an input vector $x \in \mathbb{R}^D$ to generate an output vector $y \in \mathbb{R}^K$. The ANN comprises a multitude of functional units (referred to as units, neurons, artificial neurons, or nodes) grouped into layers. Typically, an ANN has an input layer, at least one hidden layer, and one output layer. In the example shown in Figure 7, the ANN 700 has an input layer, two hidden layers, and an output layer. As can be seen, each layer comprises a collection of neurons coupled via edges to nodes within adjacent layers.

The input layer of the ANN 700 has three neurons, one for each variable in the input vector x. Each of the neurons of the input layer are connected to each of the four neurons of the first hidden layer such that each neuron in the first hidden layer computes a weighted linear combination of the input variables (often referred to as an activation or activation value). Thus, each neuron within the hidden layers and the output layer of the ANN 700 computes an activation, $a_j$, corresponding to a weighted linear combination of the neurons within the previous layer. A nonlinear, differentiable, activation function $h(\cdot)$, is applied to the activation such that the output, $z_j$, of a neuron is computed as $z_j = h(a_j)$.

In general, the outputs, $z_j^{(l)}$, for layer $l$ of the ANN 700 can be computed according to

$$z_j^{(l)} = h^{(l)} \left( \sum_{i=0}^{M} w_{ji}^{(l)} z_i^{(l-1)} \right), \qquad (1)$$

where M is the number of neurons in the ($l$ - 1)-th layer of the ANN 700, $z_i^{(l-1)}$ is the $i$-th hidden unit in the ($l$ - 1)-th layer, $w_{ji}^{(l)}$ is the vector of weights (with the superscript ($l$) indicating that the weights relate to the $l$-th layer of the ANN 700), and $x_0 = 1$ is appended to **x** to allow for the calculation of the bias $w_{j0}^{(1)}$ to be incorporated into the summation. For the first hidden layer, $M = D$ and the hidden units $z_i^{(l-1)}$ of the previous layer correspond to the input variables $x_i$. For the output layer, the hidden units being computed, $z_i^{(l)}$, correspond to the output variables $y_i$. The function $h^{(l)}$ corresponds to the activation function used for the $l$-th layer. Typically, the output layer applies a different activation function than that used for the hidden layers. For example, hidden layers often utilize sigmoidal functions such as the logistic sigmoid function or the "tanh" function, whilst the activation function utilized by the output layer depends on the task (e.g., softmax for multiclass classification and identity for regression).

To determine the optimal values of the weights for each layer, the ANN 700 is trained on a set of training data using a suitable training methodology such as gradient descent with backpropagation or a stochastic optimization approach such as the Adam optimizer.

An artificial neural network, such as that illustrated in Figure 7, may be modelled within an executable graph-based model by utilizing an overlay neuron structure which is composed into a larger overlay hypergraph as described below. In general, the overlay neuron structure models nodes within an artificial neural network as hyperedges comprising a set of role nodes which define connective relationships with an adjacent layer. Whilst a standard ANN uses a weighted direct graph with each edge connecting only two perceptrons (as shown in Figure 7), the overlay neuron structure of the present disclosure is undirected with roles providing connectivity between layers. As will be described in more detail in the following, this structure allows additional processing logic to be integrated into the neural network through the application of one or more overlays, whilst also providing efficient parallel computation of outputs (predictions) from the network.

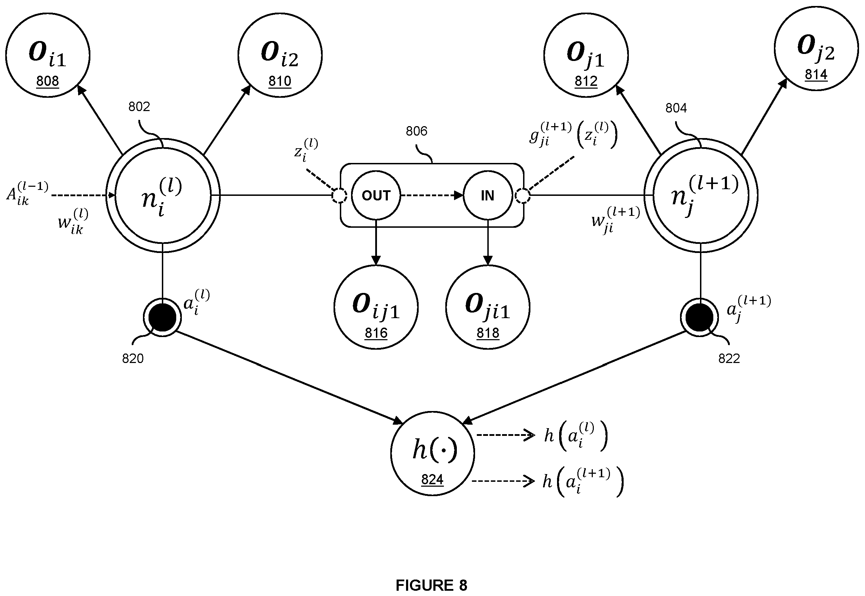

Figure 8 shows an overlay neuron structure according to an embodiment of the present disclosure.

Figure 8 shows a first hyperedge 802, $n_i^{(l)}$, and a second hyperedge 804, $n_j^{(l+1)}$, connected via a role node 806 owned by the second hyperedge 804. The first hyperedge 802 is an executable hyperedge comprising a first overlay node 808, **O**$_{i1}$, and a second overlay node 810, **O**$_{i2}$. The second hyperedge 804 is an executable hyperedge comprising a third overlay node 812, **O**$_{j1}$, and a fourth overlay node 814, **O**$_{j2}$. The role node 806 is an executable role node comprising a fifth overlay node 816, **O**$_{ij1}$, and a sixth overlay node 818, **O**$_{ji1}$. The first hyperedge 802 is associated with a first value node 820 which holds the activation value $a_i^{(l)}$. The second hyperedge 804 is associated with a second value node 822 which holds the activation value $a_i^{(l+1)}$. Both the first value node 820 and the second value nodes 822 are executable nodes comprising an activation function overlay node 824, $h(\cdot)$, which comprises processing logic operable to apply an activation function to an input value (e.g., calculate the output $h\left(a_i^{(l)}\right)$ for the activation value $a_i^{(l)}$ of the first hyperedge 802 $n_i^{(l)}$). For brevity, all nodes (e.g., hyperedges, role nodes, etc.) are considered to utilize the same activation function.

However, the skilled person will appreciate that, as shown in Figure 7, different activation functions may be utilized for different layers.

The overlay neuron structure shown in Figure 8 represents a connective relationship between two neurons within two adjacent layers of an artificial neural network (ANN). The first hyperedge 802 represents a first artificial neuron (node or unit) within a first layer (i.e., the *l*-th layer) of the ANN, and the second hyperedge 804 represents a second artificial neuron within a second, subsequent, layer (i.e., the (*l* + 1)-th layer) of the ANN. The first layer may be the input layer of the ANN or a hidden layer of the ANN. The second layer may be a hidden layer of the ANN or the output layer of the ANN.

Both the first hyperedge 802 and the second hyperedge 804 are nodes having a neural network hyperedge node type. The neural network hyperedge node type is an extension of the hyperedge node type (i.e., the hyperedge node type 604 described in relation to Figure 6 above). The neural network hyperedge node type extends the functionality of the hyperedge node type by providing additional attributes (e.g., a bias attribute, an activation value attribute, etc.) and base processing logic (e.g., processing logic for summing input values) to provide the functionality of an artificial neuron. Throughout the following, reference to a hyperedge is considered to be a reference to a hyperedge having the neural network hyperedge node type.

The role node 806 is owned by the second hyperedge 804 and functionally connects the first hyperedge 802 and the second hyperedge 804 and thus forms a connective relationship between the first layer and the second layer of the ANN. The role node 806 comprises an attribute storing the weight value $w_{ji}^{(l+1)}$ to be assigned to the connective relationship between artificial neurons $n_i^{(l)}$ and $n_j^{(l+1)}$.

The first hyperedge 802, $n_i^{(l)}$, has M inputs $A_{ik}^{(l-1)}$ from the previous layer (where $k$ = 1, ..., *M*) each having an associated weight $w_{ik}^{(l-1)}$. Here, the previous inputs may be inputs from the input layer or inputs from a (previous) hidden layer. The previous inputs are represented by a set of role nodes owned by the first hyperedge 802 (not shown). The first hyperedge 802 further comprises a bias $b_i^{(l)}$ stored as an attribute value of the first hyperedge 802 or a value node associated with the first hyperedge 802. In the example shown in Figure 8, there are two overlay nodes associated with the first hyperedge 802-the first overlay node 808 $\boldsymbol{O}_{i1}$ and the second overlay node 810 $\boldsymbol{O}_{i1}$. Each overlay node may be considered a function such that the activation value $a_i^{(l)}$ is calculated by the first hyperedge 802 as

$$a_i^{(l)} = \sum_{k=1}^{N} \boldsymbol{O}_{i1}\left(\boldsymbol{O}_{i2}\left(w_{il}^{(l)} A_{ik}^{(l-1)}\right)\right) + b_i^{(l)}. \qquad (2)$$

The ordering of the application of the overlay nodes may be set by configuration of the first hyperedge 802 or may be determined according to a priority value associated with each overlay node such that higher priority overlay nodes are executed first. The activation function, $h(\cdot)$, is applied to the activation value $a_i^{(l)}$ stored within the first value node 820 via the activation function overlay node 824 leading to an output value for the first hyperedge 802 calculated as $z_i^{(l)} = h\left(a_i^{(l)}\right)$. In Figure 8, the activation value for the first hyperedge 802 is stored within the first value node 820; however, the activation value may alternatively be stored as an attribute value of the first hyperedge 802 and the activation function overlay node 824 is coupled directly to the first hyperedge 802 to calculate the output value. Alternatively, the activation value is stored in the role node 806 along with the outcome of the two possible perturbations as a result of the fifth overlay node 816 $\boldsymbol{O}_{ij1}$ and the sixth overlay node 818 $\boldsymbol{O}_{ji1}$.

As shown in Figure 8, the first hyperedge 802 is connected to the second hyperedge 804 via the role node 806. The role node 806 not only connects the two hyperedges but also applies zero or more overlay nodes. An overlay node applied to a role node may be connected to the output of the previous layer (the "OUT" connection of the role node 806 shown in Figure 8) or the input to the current layer (the "IN" connection of the role node 806 shown in Figure 8). Whilst Figure 8 shows each connection ("OUT" and "IN") having only one associated role, the skilled person will appreciate that each connection can have zero to many overlay nodes associated therewith. As such, the role node 806 may be consider a function $g_{ji}^{(l+1)}(\cdot)$ applied to the output $z_i^{(l)}$ of the first hyperedge 802 such that

$$g_{ji}^{(l+1)}\left(z_i^{(l)}\right) = \boldsymbol{O}_{ji1}\left(\boldsymbol{O}_{ij1}\left(z_i^{(l)}\right)\right)$$

$$= \boldsymbol{O}_{ji1}\left(\boldsymbol{O}_{ij1}\left(h\left(\sum_{k=1}^{N}\boldsymbol{O}_{i1}\left(\boldsymbol{O}_{i2}\left(w_{ik}^{(l)}A_{ik}^{(l-1)}\right)\right)+b_i^{(l)}\right)\right)\right). \tag{3}$$

As can be seen, the separation of the "OUT" and "IN" connections allows control over the ordering of the execution of overlay nodes applied to the role node 806 (since, via composition, overlay nodes connected to the "OUT" connection are executed before those connected to the "IN" connection).

The output of the role node 806, , $g_{ji}^{(l+1)}\left(z_i^{(l)}\right)$, is then provided as input to the second hyperedge 804. As the *l*-th layer comprises *N* hyperedges, there are *N* role nodes defining connective relationships to the *N* hyperedges within the *l*-th layer. Each connective relationship-i.e., each role node-defines a separate function (as per Equation (3)) and so the second activation value (stored at the second value node 822) is calculated as

$$a_j^{(l+1)} = \sum_{i=1}^{N}\left(\boldsymbol{O}_{j1}\left(\boldsymbol{O}_{j2}\left(w_{ji}^{(l+1)}g_{ji}^{(l+1)}\left(z_i^{(l)}\right)\right)\right)\right)+b_j^{(l+1)}, \tag{4}$$

where $b_j^{(l+1)}$ is the bias of the second hyperedge 804 (stored as an attribute value of the second hyperedge 804 or a value node associated with the second hyperedge 804).

The output of the second hyperedge 804 corresponds to $z_j^{(l+1)} = h\left(a_j^{(l+1)}\right)$ which can be expanded to

$$z_j^{(l+1)} = h\left(\sum_{i=1}^{N}\left(\boldsymbol{O}_{j1}\left(\boldsymbol{O}_{j2}\left(w_{ji}^{(l+1)}g_{ji}^{(l+1)}\left(z_i^{(l)}\right)\right)\right)\right)+b_j^{(l+1)}\right). \tag{5}$$

Therefore, unlike a standard ANN where the activation value would correspond to the weighted sum of outputs from all artificial neurons (i.e., hyperedges) with the previous layer, the activation value of the second hyperedge 804 is a function of the overlay nodes applied within the overlay neuron structure (and thus within an overlay hypergraph based neural network which utilizes such an overlay neuron structure). In general, and as described in more detail below, an overlay node is configured to perturb a first signal according to a perturbation function to generate a second signal. The first signal may be the signal received as input to the node (e.g., the hyperedge or the role node) and the second signal may be the output signal, or used to generate the output signal, of the node. As such, the activation value $a_j^{(l+1)}$ of the second hyperedge 804, $n_j^{(l+1)}$, is a function of one or more overlays applied to the second hyperedge 804 and applied to nodes (hyperedges or role nodes) within previous layers of the overlay neuron structure.

The perturbation function applied by the overlay node may be an activation function which is illustrated in Figure 8 in relation to the first value node 820 and the second value node 822 (although in some embodiments the activation value for a hyperedge is stored as an attribute value such that the overlay node comprising the activation function may be applied directly to the hyperedge). Additionally, or alternatively, the perturbation function may apply further processing to enable more complex functionality and/or processing as part of the neural network. For example, the perturbation function may apply in situ dropout, normalization, or regularization or may provide higher level functionality across groups of hyperedges such as edge detection or signal transformation.

Additionally, an overlay node may be tied to a context such that the processing logic (e.g., perturbation function) of the overlay node is executed based on a received context. That is, an input received by an overlay hypergraph based neural network may comprise an input context such that the overlay node is executed when the input context matches the context of the overlay node. This allows a single overlay hypergraph based neural network to exhibit different context-driven functionality. Moreover, the overlay structure illustrated in Figure 8 allows a high-degree of configurability regarding the scope (or domain) of perturbations applied by an overlay node. That is, the perturbations applied by the first overlay node 808 $\boldsymbol{O}_{i1}$ and the second overlay node 810 $\boldsymbol{O}_{i2}$ apply to all roles connected to the first hyperedge 802 $n_i^{(l)}$, the perturbations applied by the third overlay node 812 $\boldsymbol{O}_{j1}$ and the fourth overlay node 814 $\boldsymbol{O}_{j2}$ apply to all roles connected to the second hyperedge 804 $n_j^{(l+1)}$, while the fifth overlay node 816 $\boldsymbol{O}_{ij1}$ and the sixth overlay node 818 $\boldsymbol{O}_{ij1}$ apply to specific role connections between the first hyperedge 802 $n_i^{(l)}$ and the second hyperedge 804 $n_j^{(l+1)}$. Furthermore, whilst Figure 8 shows separate overlay nodes coupled to the different hyperedges and role nodes, the same overlay nodes may be shared across all hyperedges within a layer and/or across different layers.

Having described the neuron overlay structure (which forms the basis of an overlay hypergraph based neural network), Figure 9A shows the ANN 700 of Figure 7 modelled as an overlay hypergraph 900 (i.e., an overlay hypergraph based neural network).

The overlay hypergraph 900 comprises an input layer, a first hidden layer, a second hidden layer, and an output layer. The input layer comprises a first input hyperedge 902, a second input hyperedge 904, and a third input hyperedge 906. The first input hyperedge 902 is an executable hyperedge comprising a first overlay node 908. The first hidden layer comprises a first plurality of hidden hyperedges 910-916 and a first plurality of sets of role nodes 918-924. Figure 9A shows a hidden hyperedge 912 of the first plurality of hidden hyperedges 910-916 that comprises a set of role nodes 920 of the first plurality of sets of role nodes 918-924. The hidden hyperedge 912 is an executable hyperedge comprising a second overlay node 926. The set of role nodes 920 comprise a first role node 928, a second role node 930, and a third role node 932. The first role node 928 is an executable role node comprising a third overlay node 934. The second hidden layer comprises a second plurality of hidden hyperedges 936-942 and a second plurality of sets of role nodes 944-950. The output layer comprises a first output hyperedge 950, a second output hyperedge 952 and a third plurality of sets of role nodes 954-956.

Each input hyperedge within the input layer represents an input variable to the artificial neural network (ANN) modelled by the overlay hypergraph 900. For example, the first input hyperedge 902 represents input variable $x_1 \in x$. The value of the input variable associated with an input hyperedge may be stored as an attribute of the input hyperedge or as a value node connected to the input hyperedge. Alternatively, an input hyperedge may be coupled to an attribute of a node within a graph-based model (i.e., a node outside of the overlay hypergraph 900) via a role of the input hyperedge such that a value of the attribute is used as the input value for the input hyperedge.

The first plurality of hidden hyperedges 910-916 within the first hidden layer are coupled to the hyperedges within the input layer via the role nodes within the first plurality of sets of role nodes 918-924. Each hyperedge represents an artificial neuron within the ANN and comprises a set of role nodes, where each role node represents a portion of a connective relationship within the ANN. For brevity, overlay nodes associated with activation functions for each of the hyperedges within the first hidden layer, the second hidden layer, and the output layer are not shown. As shown in Figure 9A, the hidden hyperedge 912 within the first hidden layer comprises the set of role nodes 920 which represent connections between layers of the ANN. For example, the first role node 928 functionally connects the first input hyperedge 902 of the input layer and the hidden hyperedge 912 of the first hidden layer. The first role node 928 thus comprises a first connective relationship associated with the first input hyperedge 902 and a second connective relationship with the hidden hyperedge 912. As described in more detail below, processing logic may be assigned to each connective relationship via one or more overlay nodes coupled to the first role node 928.

Each of the first plurality of hidden hyperedges 910-916 owns the associated set of role nodes within the first plurality of sets of role nodes 918-924. For example, the hidden hyperedge 912 owns the first role node 928, the second role node 930, and the third role node 932 within the set of role nodes 920. Each role node defines a connective relationship with an input hyperedge within the input layer (e.g., the first role node 928 defines a connective relationship with the first input hyperedge 902).

Advantageously, by modelling the ANN as an overlay hypergraph, one or more overlay nodes may be coupled to a hypernode or a role node to imbue the hypernode or role node with extra functionality and processing logic. In Figure 9A, the first input hyperedge comprises the first overlay node 908, the hidden hyperedge 912 comprises the second overlay node 926, and the first role node 928 comprises the third overlay node 934. The skilled person will appreciate that only three overlay nodes are shown in Figure 9A for brevity, and an overlay hypergraph based neural network may include more overlay nodes than shown. The structure of the overlay hypergraph 900 allows processing logic to be efficiently injected into the ANN in relation to one node (e.g., hyperedge, role node), some nodes, or all nodes. For example, the first overlay node 908 may be considered a function $O_1(\cdot)$ which can modify (e.g., transform, perturb, etc.) the associated input variable $x_1$ to generate a modified input variable $O_1(x_1)$. The modified input variable $O_1(x_1)$ is passed to all connected role nodes within the first hidden layer. In contrast, the third overlay node 934 is coupled to the first role node 928 and so the function defined by the third overlay node $O_3(\cdot)$ may only modify the associated input, $x_1$ or $O_1(x_1)$, in relation to the connection to the hidden hyperedge 912. That is, when both the first overlay node 908 and the third overlay node 934 are used, the input received from the first input hyperedge 902 at the hidden hyperedge 910 (via an associated role node with no associated overlay within the set of role nodes 918) is $O_1(x_1)$, whereas the input received from the first input hyperedge 902 at the hidden hyperedge 912 (via the first role node 928) is $O_3(O_1(x_1))$. In addition, and as described in relation to Figure 8 above, the third overlay node 934 may be associated with either of the connective relationships defined by the first role node 928 (e.g., the "OUT"/"IN" relationships shown in the role node 806 of Figure 8). The second overlay node 926 is coupled to the hidden hyperedge 912 and so the processing logic (function) defined by the second overlay node 926 $O_1(\cdot)$ applies to all inputs received from the set of role nodes 928.

The overlay hypergraph 900 therefore allows additional functionality to be efficiently integrated into an artificial neural network whilst allowing a diverse range of possible configurations for the integration. This in turn allows additional functionality to be executed in situ alongside the execution of the overlay hypergraph 900 based neural network (both during training and/or inference).

As mentioned above in relation to Figure 8, the execution of overlay nodes within the overlay hypergraph 900 may be context driven. That is, whether an overlay node is executed, or which overlay node(s) of a group of overlay nodes is/are executed, is dependent upon context. The request to trigger execution of the overlay hypergraph 900 may be accompanied by an input context and an overlay node may be associated with a context such that the overlay node is executed when the input context matches the context of the overlay node. For example, an input received at the first input hyperedge 902 may be associated with a "personal" context-indicating that the received input corresponds to personal data (e.g., a user's age). The first overlay node 908 is associated with the "personal" context and is executed causing the input to be perturbed (e.g., replaced with an age value randomly sampled from a distribution of ages). The inclusion of context-driven overlay execution improves the flexibility and configurability of the overlay hypergraph based neural network and allows the same overlay hypergraph based neural network to be used across a range of contexts and problem domains.

Referring once again to the general description of the overlay hypergraph 900, the second hidden layer is coupled to the first hidden layer via the second plurality of sets of role nodes 944-950. The second hidden layer comprises the second plurality of hidden hyperedges 936 such that each hidden hyperedge within the second layer is coupled to the hidden hyperedges within the first hidden layer via a corresponding set of role nodes. The structure of the role nodes and hidden hyperedges have been simplified within Figure 9A for brevity, but the skilled person will appreciate that the structure described in relation to the first hidden layer and the input layer is applicable to the structure and relationship between the second hidden layer and the first hidden layer. The output layer is coupled to the second hidden layer via the third plurality of role nodes 954-956. The first output hyperedge 950 and the second output hyperedge 952 of the output layer represent variables of the output vector $y$. For example, the first output hyperedge 950 represents output variable $y_1 \in y$. The value of the output variable associated with an output hyperedge may be stored as an attribute of the output hyperedge or as a value node connected to the output hyperedge.

In use, inputs are propagated through the overlay hypergraph 900 via state changes. That is, a state change in a first hyperedge within a first layer triggers a state change in a connected role node which subsequently triggers a state change in a second hyperedge within a second layer (where the second hyperedge owns the connected role node). Each node (hyperedge or role node) stores a state potential-an attribute corresponding to the value of the node's current state-and a change in the state potential triggers a state change. The state change can cause the node associated with the change to advertise the change (e.g., notify one or more nodes registered with the node as observers) and any other nodes to re-calculate or update state based on the advertised change. Additionally, a state change may trigger the execution of one or more overlay nodes. In one embodiment, the input and outputs may be temporally switched in and out of the hyperedges meaning that an input signal cannot change until an output signal is received thereby allowing correlation of data. In such an embodiment, inputs to a hyperedge are queued or executed upon receiving a state change.

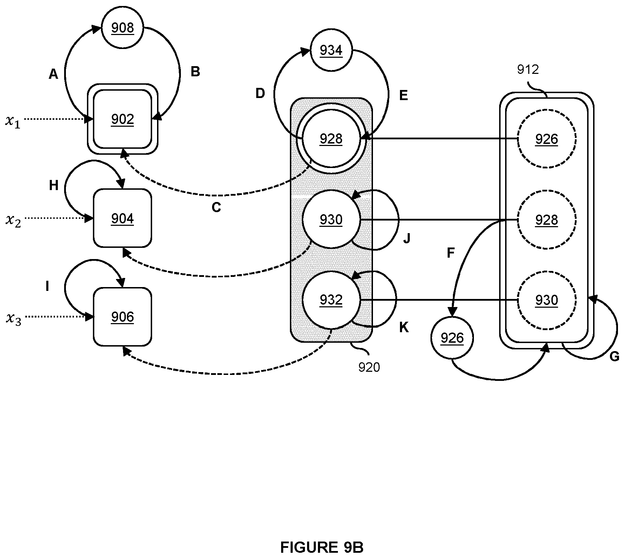

To illustrate input propagation via state change, Figure 9B shows a portion of the overlay hypergraph 900 of Figure 9A.

The first input hyperedge 902, the second input hyperedge 904, and the third input hyperedge 906 represent input variables $x_1$, $x_2$, $x_3$ respectively and have respective initial states $S_0^{(x_1)}, S_0^{(x_2)}, S_0^{(x_3)}$. Throughout the description of Figure 9B, the superscript of a state variable corresponds to the node associated with the state variable. The first role node 928, the second role node 930, and the third role node 932 represent roles $r_1$, $r_2$, $r_3$ and have respective initial states $S_0^{(r_1)}, S_0^{(r_2)}, S_0^{(r_3)}$. The hidden hyperedge 912 represents the hidden unit $z_1$ with initial state $S_0^{(z_1)}$.

The first input hyperedge 902 receives an input value (i.e., an attribute or value node associated with the first input hyperedge 902 is set to the input value) causing execution of the processing logic of the first overlay node 908 (path "A" in Figure 9B). The processing logic of the first overlay node 908 modifies the input value and sets the state potential of the first input hyperedge 902 (i.e., an attribute of the first input hyperedge 902 associated with the hyperedge's current state) to the modified input value (path "B" in Figure 9B). The state of the first input hyperedge 902 thus changes from $S_0^{(x_1)} \rightarrow S_1^{(x_1)}$. For simplicity, throughout the following description the state of a node (e.g., $S_1^{(x_1)}$) is used to refer to the value of the state potential of the node at a given time point (e.g., $S_0^{(x_1)}$ is the initial value of the first input hyperedge 902 and $S_1^{(x_1)}$ is the modified value of the input hyperedge 902 at $t$ = 1). The skilled person will appreciate that in some embodiments or implementations the state of a node encompasses more than just the state potential-or current value-of the node.

As a result of the change in state potential in the first input hyperedge 902, the first role node 928 is notified of this change in state and obtains $S_1^{(x_1)}$ from the first input hyperedge 902 (path "C" in Figure 9B) causing execution of the processing logic of the third overlay node 934 (path "D" in Figure 9B). The processing logic of the third overlay node 934 may perform one or more further operations and subsequently update the state potential of the first role node 928 from $S_0^{(r_1)} \rightarrow S_1^{(r_1)}$ (path "E" in Figure 9B).

The first role node 928 is a role node owned by the hidden hyperedge 912 and so the change in state of the first role node 928 causes the hidden hyperedge 912 to update (re-calculate) its state based on the new state $S_1^{(r_1)}$. That is, the hidden hyperedge 912 obtains the updated state potential from the first role node 928 causing execution of the second overlay node 926 (path "F" in Figure 9B) and subsequently the re-calculation of the state potential of the hidden hyperedge 912 (path "G" in Figure 9B) using the updated state potential of the first role node 928 (which is potentially modified by the processing logic of the second overlay node 926).

The state potential of the hidden hyperedge 912 is calculated using a weighted sum of the input state potentials: u $= w_1 S^{(r1)} + w_2 S^{(r2)} + w_3 S^{(r3)}$ (here, the notation of the weight vector has been simplified from that used in relation to Figures 8 and 9A brevity). Thus, the updated state of the hidden hyperedge 912 is calculated using the weighted sum

$$u = \boldsymbol{O}_2\left(w_1 S_1^{(r_1)}\right) + \boldsymbol{O}_2\left(w_2 S_0^{(r_2)}\right) + \boldsymbol{O}_2\left(w_3 S_0^{(r_3)}\right)$$ . The updated state of the hidden hyperedge 912 is calculated as $S_1^{(z_1)} = h(u + b)$ where b is the bias term for the hidden hyperedge 912.

As such, the updated state of the hidden hyperedge 912 is calculated using the updated state of the first role node 928 and the initial states of the second role node 930 and the third role node 932. In one embodiment, the hidden hyperedge 912 updates state only when the states of all inputs have been updated.

In addition to the above state changes, the second input hyperedge 904 and the third input hyperedge 906 receive input values causing state changes $S_0^{(x_2)} \rightarrow S_1^{(x_2)}$ and $S_0^{(x_3)} \rightarrow S_1^{(x_3)}$ (paths "H" and "I" in Figure 9B). The input values may be received at each of the input hyperedges simultaneously or near simultaneously such that the described state updates occur in parallel (or substantially in parallel). Alternatively, only one input value may be received at one of the input hyperedges such that the states are updated with respect to the new input value only (as described above in relation the first update to the hidden hyperedge 912). As a further alternative, and as mentioned above, an input signal cannot change until an output signal is received thereby allowing correlation of data.

The changes in state in the second input hyperedge 904 and the third input hyperedge 906 cause the second role node 930 and the third role node 932 to re-calculate state (paths "J" and "K" in Figure 9B) in a similar manner as described in relation to the first role node 928 above. The changes in state of the second role node 930 and the third role node 932 cause the hidden hyperedge 912 to re-calculate its state such that, if the state of the second role node 930 is updated before the state of the third role node 932, then the updated state of the hidden hyperedge 912 is calculated as

$$S_1^{(z_1)} \rightarrow S_2^{(z_1)} \quad \text{where} \quad S_2^{(z_1)} = h\left(\boldsymbol{O}_2\left(w_1 S_1^{(r_1)}\right) + \boldsymbol{O}_2\left(w_2 S_1^{(r_2)}\right) + \boldsymbol{O}_2\left(w_3 S_0^{(r_3)}\right) + b\right) \quad \text{and then}$$

$$S_2^{(z_1)} \rightarrow S_3^{(z_1)} \quad \text{where} \quad S_3^{(z_1)} = h\left(\boldsymbol{O}_2\left(w_1 S_1^{(r_1)}\right) + \boldsymbol{O}_2\left(w_2 S_1^{(r_2)}\right) + \boldsymbol{O}_2\left(w_3 S_1^{(r_3)}\right) + b\right) \quad .$$

Advantageously, the structure of an overlay hypergraph based neural network and the state based propagation of an input signal allows for efficient parallel computation of an output signal. That is, state updates for each node may be executed as individual computations executing in parallel. This allows an overlay hypergraph based neural network to perform inference quickly and efficiently thereby reducing the latency between the data layer and processing logic layer of an executable graph-based model. Additionally, the parallel processing may be further improved through the effective use of graphical processing units (GPUs) where the overlay hypergraph 900 is converted into one or more computational structures with the processing logic of the overlay nodes being converted to (mathematical) functions which act on suitable vector representations of the input signal.

The skilled person will appreciate that overlay hypergraph based neural networks can also be trained using forward and backward passes which utilize the above described state based signal propagation (e.g., back propagation can be implemented using the above described methodology to calculate the weights and biases of the neural network). Alternatively, the weights and biases of the neural network can be determined using an external training methodology and the resulting values incorporated into an overlay hypergraph. For example, a neural network having the same topology as that modelled by an overlay hypergraph is trained outside of the overlay system and the resulting weights and biases added to the overlay hypergraph. In one embodiment, the weight value and/or the bias is calculated from an overlay coupled to the corresponding role node or hyperedge. Advantageously, this allows for a high degree of interchangeability.

Having described the structure of overlay hypergraph based neural networks, the description will now turn to the integration of overlay hypergraph based neural networks within executable graph-based models.

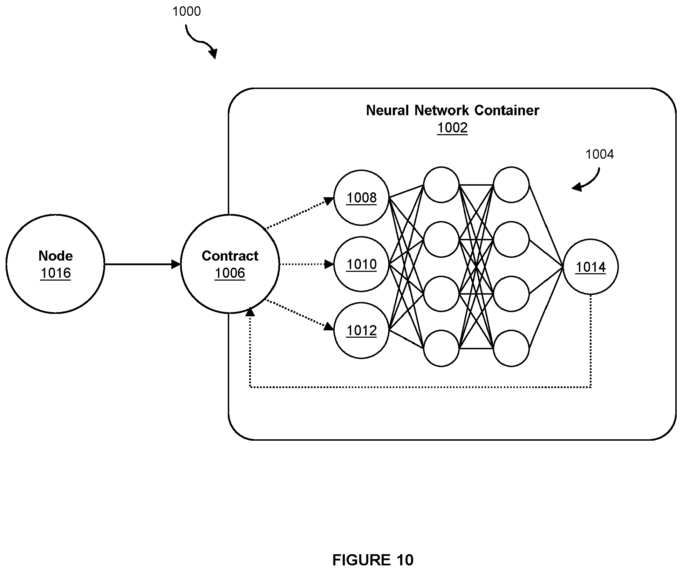

Figure 10 shows the integration of an overlay hypergraph based neural network within a graph-based model according to embodiments of the present disclosure.

Figure 10 shows an executable graph-based model 1000 comprising a neural network container 1002. The neural network container 1002 comprises an overlay hypergraph based neural network 1004 and a contract node 1006. The overlay hypergraph based neural network 1004 comprises a plurality of input hyperedges 1008-1012 and an output hyperedge 1014. The graph-based model 1000 further comprises a node 1016 which calls the contract node 1006.

The neural network container 1002 is a node within the executable graph-based model 1000 comprising a container node type (or any other suitable node group node type). As such, the neural network container 1002 comprises (or comprises references to) the nodes which make up the overlay hypergraph based neural network 1004 (e.g., the plurality of input hyperedges 1008-1012, the output hyperedge 1014, etc.). Thus, the neural network container 1002 encapsulates the overlay hypergraph based neural network 1004 within the executable graph-based model 1000. This facilitates reuse of the overlay hypergraph based neural network 1004 across different nodes within the same graph-based model and across different graph-based models.

The contract node 1006 provides an interface to the overlay hypergraph based neural network 1004 via an attribute mapping to the plurality of input hyperedges 1008-1012 and the output hyperedge 1014 (as described in detail above in relation to Figure 4C). As such, elements within the executable graph-based model 1000 interact with the overlay hypergraph based neural network 1004 via the contract node 1006 which may be considered a form of application programming interface (API) for providing input and obtaining output from the overlay hypergraph based neural network 1004. That is, the node 1016 accesses the functionality of the overlay hypergraph based neural network 1004 via the contract node 1006. Given that the overlay hypergraph based neural network 1004 is encapsulated within the neural network container 1002, the node 1016 may not be aware that the contract node 1006 accesses the overlay hypergraph based neural network 1004 (since the contract node 1006 provides a layer of abstraction between the node 1016 and the overlay hypergraph based neural network 1004). For example, input may be provided to the overlay hypergraph based neural network 1004 by setting values for the attributes within the contract node 1006 which are mapped to the plurality of input hyperedges 1008-1012 via the attribute mapping of the contract node 1006. Similarly, the output (inference or prediction value) calculated by the overlay hypergraph based neural network 1004 may be obtained by reading the value of the attribute within the contract node 1006 which maps to the output hyperedge 1014.

The input signal represented by the input values provided to the contract node 1006 are automatically propagated through the overlay hypergraph based neural network 1004 based neural network to calculate the output signal (the output inference or prediction), as described in detail above in relation to Figure 9B. Alternatively, the contract node 1006 is configured to provide the input values to the overlay hypergraph based neural network 1004 when a trigger signal is received.

The skilled person will appreciate the present disclosure is not limited to integrating an overlay hypergraph based neural network within a graph-based model (i.e., within a container) via the use of a contract node. Indeed, the overlay hypergraph based neural network can be integrated directly with a container (container node) in an alternative implementation.

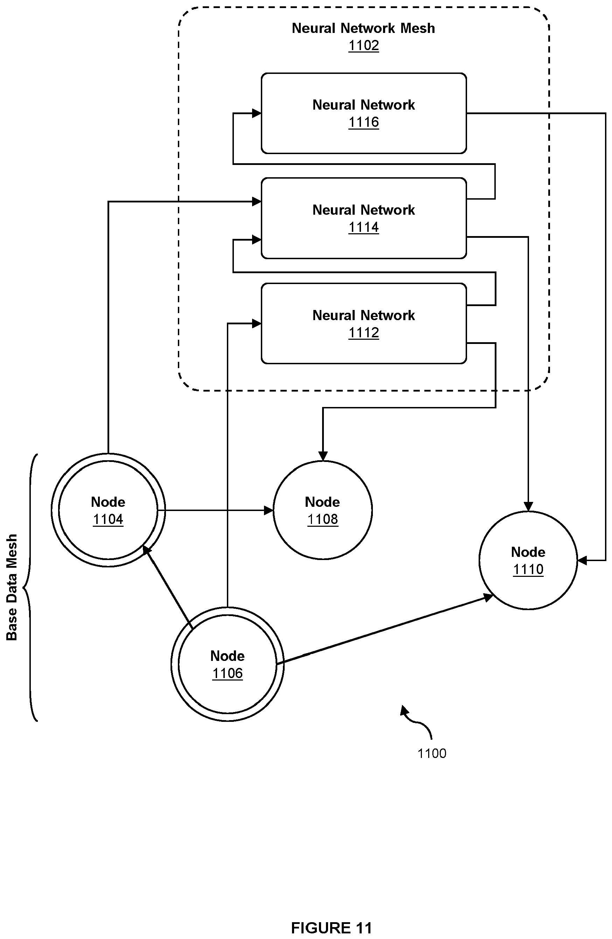

Figure 11 shows the integration of multiple neural networks in the form of a neural mesh according to embodiments of the present disclosure.

Figure 11 shows an executable graph-based model 1100 comprising a base data mesh and a neural network mesh 1102. The base data mesh corresponds to a portion of the executable graph-based model 1100 comprising a first executable node 1104, a second executable node 1106, a first data node 1108, and a second data node 1110. The neural network mesh 1102 comprises a first overlay hypergraph 1112, a second overlay hypergraph 1114, and a third overlay hypergraph 1116.

The executable graph-based model 1100 shown in Figure 11 is a simplification of a graph-based model as described in the present disclosure, with overlay nodes, contract nodes, containers, and the like not shown for brevity and ease of understanding.

Each overlay hypergraph within the neural network mesh 1102 models an artificial neural network (ANN) and comprises an input layer, at least one hidden layer, and an output layer. As such, the overlay hypergraphs within the neural network mesh 1102 are structured according to the overlay neuron structure described in relation to Figure 8 above. As shown in Figure 11, the overlay hypergraphs within the neural network mesh 1102 are coupled to form a mesh structure. That is, the first overlay hypergraph 1112 is coupled to the second overlay hypergraph 1114 such that the output from at least one hyperedge of the output layer of the first overlay hypergraph 1112 is provided as input to at least hyperedge of the input layer of the second overlay hypergraph 1114. Similarly, the output from at least one hyperedge of the output layer of the second overlay hypergraph 1114 is provided as input to at least hyperedge of the input layer of the third overlay hypergraph 1116.

The neural network mesh 1102 is also coupled to nodes within the base data mesh. The first executable node 1104 is coupled to the input layer of the second overlay hypergraph 1114, the second executable node 1106 is coupled to the input layer of the first overlay hypergraph 1112, the output of the first overlay hypergraph 1112 is coupled to the first data node 1108, and the outputs of the second overlay hypergraph 1114 and the third overlay hypergraph 1116 are coupled to the second data node 1110. In this way, nodes within the base data mesh can provide input values to the overlay hypergraphs within the neural network mesh 1102 (and trigger execution of one or more of the overlay hypergraphs within the neural network mesh 1102) and also obtain/receive output values from the overlay hypergraphs within the neural network mesh 1102.

Moreover, one or more overlay nodes may be associated with the overlay hypergraphs which make up the neural network mesh 1102 to realize additional functionality. For example, an overlay node may be coupled to the output layer of the second overlay hypergraph 114 to control the subsequent output flow. That is, the overlay node may apply one or more rules to determine whether the output of the second overlay hypergraph 114 is passed to the third overlay hypergraph 1116 for further processing or whether the output is provided to the second data node 1110 for storage/processing. As such, overlay nodes may be added to a neural network mesh to define rules governing the processing and execution of the overlay hypergraphs within the neural network mesh. The rules may be context driven such that the decision of whether an overlay hypergraph within the neural network mesh is executed or not is dependent upon context.

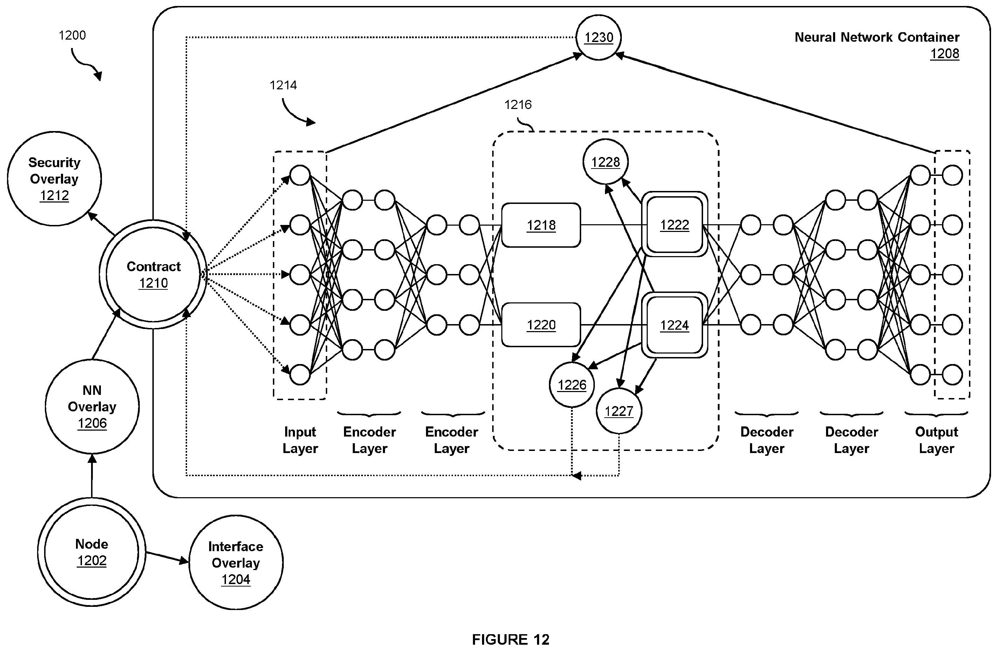

Figure 12 shows an executable graph-based model 1200 for monitoring and controlling a manufacturing system according to an embodiment of the present disclosure.

The executable graph-based model 1200 comprises an executable node 1202 comprising an interface overlay node 1204 and a neural network overlay node 1206. The executable graph-based model 1200 further comprises a neural network container 1208 comprising an executable contract node 1210 comprising a security overlay node 1212. The neural network container 1208 comprises an overlay hypergraph based neural network 1214 which models an autoencoder neural network. Figure 12 shows a bottleneck portion 1216 of the overlay hypergraph based neural network 1214. The bottleneck portion 1216 comprises a first set of role nodes 1218, a second set of role nodes 1220, a first hidden hyperedge 1222, and a second hidden hyperedge 1224. The first hidden hyperedge 1222 and the second hidden hyperedge 1224 are executable hyperedges and are both coupled to a first classifier overlay node 1226, a second classifier overlay node 1227, and a visualization overlay node 1228. The hyperedges within the input layer and the output layer of the overlay hypergraph based neural network 1214 are coupled to the reconstruction error overlay node 1230. The executable contract node 1210 provides an attribute mapping to the plurality of hyperedges within the input layer of the overlay hypergraph based neural network 1214, the first classifier overlay node 1226, the second classifier overlay node 1227, and the reconstruction overlay node 1230.

In general, the executable graph-based model 1200 provides in situ and real time, or near real time, monitoring, prediction, and control of a manufacturing system. In particular, the manufacturing system employs an industrial manufacturing process to make components to a predefined specification or tolerance. It is important to ensure that the manufactured components adhere to the predefined specification or tolerance to ensure that the components correctly integrate with other components. In addition, due to the high throughput of components manufactured, manual assessment of each component is impractical, and any automated inspection process should have as low a latency as possible.

As will be described in detail below, the overlay hypergraph based neural network 1214 models an autoencoder neural network maps measurements of a component into a low-dimensional feature space for classification and visualization. The classification and visualization components are integrated as overlays of the overlay hypergraph based neural network 1214 thereby allowing the classification and visualization functionality to be executed in situ as part of the propagation of a signal through the overlay hypergraph based neural network 1214. This not only helps reduce latency but also improves flexibility and extensibility by allowing additional and/or alternative classifiers or components to be integrated into the neural network. For example, and as described below, two different classifiers are coupled to the overlay hypergraph based neural network 1214 and a respective one of the two classifiers executed based on a received context.

To monitor and control the manufacturing process, the executable node 1202 obtains a plurality of measurements of a manufactured component from the interface overlay node 1204. The interface overlay node 1204 comprises processing logic operable to interact with sensors installed as part of the manufacturing pipeline and configured to obtain measurements of, or related to, a component (e.g., component dimensions, specular properties, weight, etc.). In one embodiment, the measurements obtained are the width, length, and depth of the component (in mm), a reflectance measurement, and a weight (in grams). The interface overlay node 1204 further comprises processing logic operable to control the manufacturing process. Particularly, the processing logic provides instructions to the manufacturing process to accept or reject the component.

The measurements obtained by the interface overlay node 1204 are provided to the executable contract node 1210 via the neural network overlay node 1206. In one embodiment, the measurements are provided to the executable contract node 1210 with an accompanying context. The accompanying context provides an indication of the type of component. The security overlay node 121 of the executable contract node 1210 executes processing logic to check that the executable node 1202 has sufficient privileges to interface with the neural network container 1208 via the executable contract node 1210. As the executable node 1202 does have sufficient privileges, the measurements are provided to the attributes of the executable contract node 1210 which map to the input layer of the overlay hypergraph based neural network 1214. In one embodiment, the accompanying context is also provided as input to the input layer of the overlay hypergraph based neural network 1214.

As stated above, the overlay hypergraph based neural network 1214 models an autoencoder comprising an input layer, two encoder layers, the bottleneck portion 1216, two decoder layers, and an output layer. The input layer comprises five hyperedges arranged to receive a 5-dimensional vector as input. The encoder portion of the overlay hypergraph based neural network 1214 comprises a first encoder layer and a second encoder layer. The first encoder layer comprises four sets of role nodes coupled to four hidden hyperedges. The connections between the role nodes and hyperedges in adjacent layers follows that described in relation to Figures 8 and 9 above such that each set of role nodes couples a hidden hyperedge in the first encoder layer to each input hyperedge within the input layer. The second encoder layer comprises three sets of role nodes coupled to three hidden hyperedges, with each set of role nodes coupling a hidden hyperedge in the second encoder layer to each hidden hyperedge in the first encoder layer. The decoder portion of the overlay hypergraph based neural network 1214 mirrors the encoder portion. That is, the first decoder layer is a mirror of the second encoder layer and the second decoder layer is a mirror of the first encoder layer such that the output layer comprises five output hyperedges with outputs corresponding to a reconstruction of the input provided to the input layer.

As is known, an autoencoder, such as that modelled by the overlay hypergraph based neural network 1214, is trained to encode an input signal into a lower-dimensional latent space (using the encoder portion) and then decode the lower-dimensional representation of the input signal to generate a reconstruction of the input signal (using the decoder portion). An autoencoder therefore learns a mapping from the high-dimensional input space to a low-dimensional latent space. Autoencoders provide a mechanism for reducing the dimensionality of a data set by mapping data to a low-dimensional feature space within which further processing (e.g., classification) may be more efficiently and accurately performed.

The overlay hypergraph based neural network 1214 maps from a five-dimensional input space to a two-dimensional latent space. The output of the first hidden hyperedge 1222 and the second hidden hyperedge 1224 of the bottleneck portion 1216 represent the two-dimensions of the two-dimensional latent space. That is, for a signal provided to the input layer of the overlay hypergraph based neural network 1214, the output of the first hidden hyperedge 1222 corresponds to an estimated value for the signal within the latent space along a first dimension of the latent space, and the output of the second hidden hyperedge 1224 corresponds to an estimated value for the signal along a second dimension of the latent space.

The first hidden hyperedge 1222 and the second hidden hyperedge 1224 are coupled to the first classifier overlay node 1226 and the second classifier overlay node 1227. Both classification overlay nodes comprise processing logic operable to obtain the output values of both hyperedges and apply a classifier to the output values to determine a quality score. The quality score is a binary value used to determine the quality of a manufactured component, with a value of 1 indicating a high quality component and 0 indicating a low quality component. The first classifier overlay node 1226 implements a k-nearest neighbor classifier which assigns a quality score to an input vector (i.e., the output values of the first hidden hyperedge 1222 and the second hidden hyperedge 1224) based on the quality scores of the k-nearest neighbors to the input vector within a training set. The training set comprises a plurality of training instances, where a single training instance comprises: (i) a latent space (2-dimensional) representation of a set of measurements of a component mapped to the low-dimensional latent space by the autoencoder modelled by the overlay hypergraph based neural network 1214; and (ii) an accompanying quality score for the component to which the set of measurements relate. In one implementation, the training set includes approximately 10,000 training instances of around 7,000 high quality components and around 3,000 low quality components. In one implementation, the $k$ value for the first classifier overlay node 1226 is set to $k = 1$. The second classifier overlay node 1227 implements a naive Bayes classifier which is trained on the training set to predict a quality score for a two-dimensional latent space input. The second classifier overlay node 1227 assumes that the likelihood of the features are Gaussian.

In one embodiment, the first classifier overlay node 1226 is associated with a first context and the second classifier overlay node 1227 is associated with a second context. In the absence of any received context (i.e., when the input to the overlay hypergraph based neural network 1214 does not have an input context), the first classifier overlay node 1226 is executed to predict a quality score. However, when an input context is received, then the choice of classification overlay node is based on the input context. That is, when the input context matches the first context, then the first classifier overlay node 1226 is used to estimate a quality score; whereas when the input context matches the second context, then the second classifier overlay node 1227 is used to estimate a quality score. As stated above, the received context indicates the type of component to which the measurements relate. As such, the context is used to select the most appropriate and optimal classifier for a given component type. The k-nearest neighbor classifier implemented by the first classifier overlay node 1226 is used for a first type of component and the naive Bayes classifier implemented by the second classifier overlay node 1227 is used for a second type of component. In this way, the classification approach can be contextualized and optimized in situ alongside execution of the overlay hypergraph based neural network 1214.

The first hidden hyperedge 1222 and the second hidden hyperedge 1224 are further coupled to the visualization overlay node 1228 which comprises processing logic operable to obtain the output values of both hyperedges and provide a visualization of the output values within the low-dimensional latent space. The visualization may be presented to a user or operator of the manufacturing system. As such, additional functionality can be integrated into a neural network (i.e., the overlay hypergraph based neural network 1214) without requiring any modification of the underlying representation of the neural network. This allows a user to perform tasks such as model performance monitoring, visualization, etc. efficiently and easily by adding or configuring overlay nodes to the overlay hypergraph based neural network 1214.

The reconstruction overlay node 1230 comprises processing logic operable to determine the reconstruction based on a comparison of the input signal and the output signal generated by the overlay hypergraph based neural network 1214 from the input signal. The reconstruction overlay node 1230 may be used during training of the overlay hypergraph based neural network 1214 and/or provided as a confidence value to accompany a prediction of quality score generated by the classifier overlay node 1226.

The quality score predicted by the classifier overlay node 1226 is mapped to a value for an attribute of the executable contract node 1210. The neural network overlay node 1206 monitors this attribute value and fires a stimulus which causes the interface overlay node 1204 to provide an instruction to the manufacturing process based on the attribute value. For example, when the quality score is indicative of the measured component being low quality, then the interface overlay node 1204 provides an instruction to cause the manufacturing process to discard the component.

Advantageously, because the data and processing logic are integrated within the same model, the latency between obtaining measurements, inferring a quality score, and providing an instruction to control the manufacturing process is reduced thereby leading to a more efficient and performant system.

The skilled person will appreciate that the example shown in Figure 12 is not intended to be limiting and the overlay hypergraph based neural networks described in the present disclosure may be applied across a range of application areas and problem domains.

For example, an executable graph-based model incorporating an overlay hypergraph may be used for object detection using deep learning models, such as convolutional neural networks (CNNs). As is known, object detection involves a series of steps, including feature extraction, region proposal, classification, and post-processing.

In general, object detection begins with feature extraction where an input image is passed through a deep neural network (e.g., a CNN) to extract hierarchical features at different levels of abstraction. Lower layers capture low-level features like edges and textures, while higher layers capture more complex and abstract features. Many object detection models then use a region proposal network (RPN) to generate candidate regions (bounding boxes) in the image where objects might be present. These candidate regions are based on the features extracted from the feature extraction step. Each candidate region is passed through the network for further processing. The network classifies the content of each region and predicts the probability of various predefined classes (e.g., objects or background). This step involves training the model on a labeled dataset with examples of objects and their corresponding bounding boxes. The model also predicts adjustments to the initial bounding box proposals, refining their positions to better fit the actual object boundaries. To eliminate redundant or overlapping bounding box proposals, a post-processing step called non-maximum suppression (NMS) is applied. NMS keeps the bounding box with the highest confidence score and removes others that significantly overlap with it. The final output of the object detection model includes the class labels, confidence scores, and bounding box coordinates for each detected object in the image.

The architecture of the neural network used for object detection can vary, with popular choices being Faster R-CNN (Region-based Convolutional Neural Network), SSD (Single Shot MultiBox Detector), and YOLO (You Only Look Once). Each of these architectures has its own strengths and trade-offs in terms of speed and accuracy. For example, YOLO processes the entire image in a single forward pass and predicts bounding boxes and class probabilities directly, making it faster but potentially less accurate in some scenarios. On the other hand, Faster R-CNN processes images in two stages, first proposing regions and then classifying them, which can provide higher accuracy at the cost of increased computation.

The training process involves optimizing the model's parameters (weights and biases) using a labeled dataset with annotated bounding boxes and class labels for each object of interest. This allows the model to learn to generalize and make accurate predictions on new, unseen data.

Object detection involves several steps, and not all of them need to be performed within the neural network. The following steps can be performed outside of the neural network and in most cases should be performed outside of the direct neural network. However, when the neural network is modelled as an overlay hypergraph, these steps can be integrated in situ with the neural network using overlays (as described above) thereby creating a more complete and integrated solution:

Image preprocessing steps, such as resizing, normalization, and color space conversion, lateral inhibition processing, are typically performed before inputting the image into the neural network. These steps may be incorporated into an overlay node coupled to, or prior to, the input of an overlay hypergraph based neural network and executed in situ to prepare the image data for effective feature extraction by the network.

NMS is a post-processing step that is applied after the neural network has made predictions. It helps eliminate redundant or overlapping bounding boxes. NMS can be incorporated into an overlay node coupled to one or more nodes (hyperedges or role nodes) of an overlay hypergraph based neural network and executed in situ.

Visualization of the results, such as drawing bounding boxes and class labels on the image, is often done outside of the neural network. This step is crucial for understanding and interpreting the model's predictions. Visualization can be implemented using image processing libraries or tools and can be incorporated into an overlay node coupled to the output (or intermediate point) of an overlay hypergraph based neural network.

After object detection, predictions with low confidence scores may be filtered out. This thresholding step is typically performed outside the neural network. An overlay node which sets a confidence score threshold and only keeps predictions with scores above this threshold for the defined context may be coupled to output nodes (output hyperedges) of an overlay hypergraph based neural network.

Object detection models can handle multiple object classes based on context, and post-processing for class-specific tasks may be performed outside the neural network. For example, you might want to filter detections based on specific classes of interest or perform class-specific actions. Overlay nodes incorporating such filtering logic can be coupled to an overlay hypergraph based neural network and executed in situ.

In many applications, the output of an object detection model may be integrated with other systems or processes defined in the overlay system. For instance, the detected objects and their information can be used as input for higher-level decision-making systems or integrated into a larger overlay system pipeline as part of the neural mesh described above. Such interfaces and integration logic may be defined within one or more overlay nodes coupled to the input and/or output of an overlay hypergraph based neural network.

Data augmentation involves applying random transformations to training images (e.g., rotation, flipping, scaling) to increase the diversity of the training dataset. This helps improve the model's generalization to variations in real-world images. An overlay node comprising processing logic to augment image data may be coupled to, or prior to, the input of an overlay hypergraph based neural network and executed in situ during training.

Different post-processing steps may be applied for different object classes depending on the application or context. For example, you might have specific criteria for handling certain types of objects differently. Such logic may be incorporated within one or more overlay nodes coupled to, or near, the output of an overlay hypergraph based neural network and executed in situ based on a received context.

Combining predictions from multiple models (ensemble learning) can sometimes lead to improved performance. Ensemble methods involve training or combining the outputs of multiple models to make predictions. We can construct and execute one or more runtime neural networks for the defined template and use the execution of multiple result sets to form a more complex answer.

Executing mathematical of other processing logic, such as counting the number of unique objects or identified information may also be provided within one or more overlay nodes and coupled to nodes (hyperedges or role nodes) with an overlay hypergraph based neural network and executed in situ.

In some applications, especially those involving sensitive data or surveillance, ethical considerations and privacy concerns may be important. This might involve blurring or anonymizing certain regions in the output or implementing privacy-preserving measures. Such functionality may be provided by one or more overlay nodes coupled to an overlay hypergraph based neural network and executed in situ.

The above additional considerations highlight the fact that object detection is a complex task, and the specific steps or optimizations depend on the characteristics of the data and the requirements of the application. The process of experimentation and fine-tuning to achieve the best performance in a given context can be handled by the application of in situ overlay nodes more easily than embedding the complexity within the neural network directly. This is possible since the components of an overlay hypergraph based neural network are nodes (e.g., a hyperedge edge node, a role node, etc.) which can have zero or more overlays associated to a given granularity and therefore the logic is also scoped to the same granularity. Additionally, each node in a neural network may be described, or represented, by a grouping node (such as a container node) meaning that the neural network can be a fractal network-i.e., one that is decomposed of smaller problems that are similar to the parent network in which they are a node. That is, a grouping node such as a container node can be interchanged with any edge or role in the neural network directly or by its contract. The level of design decomposition of the neural network is therefore not limited to the design of simple state nodes.

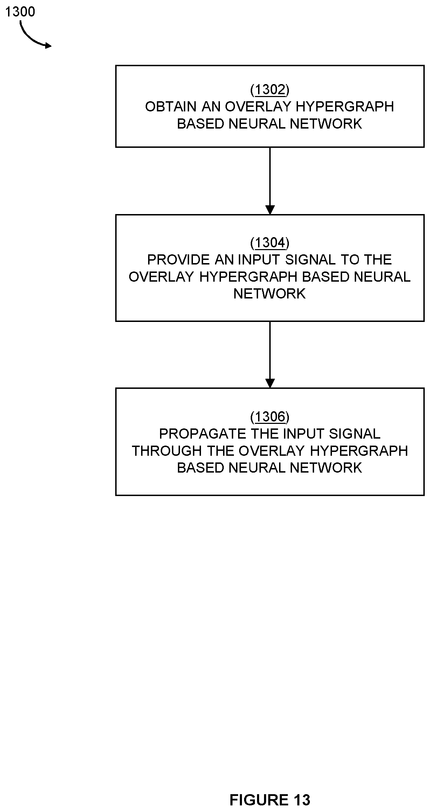

Figure 13 shows a method 1300 according to an embodiment of the present disclosure.

The method 1300 comprises the steps of obtaining 1302 an overlay hypergraph based neural network, providing 1304 an input signal to the overlay hypergraph based neural network, and propagating 1306 the input signal through the overlay hypergraph based neural network. In one embodiment, the method 1300 is performed by a system such as the system 300 described above in relation to Figure 3.

At the step of obtaining 1302, an artificial neural network (ANN) modelled as an overlay hypergraph is obtained. The overlay hypergraph comprises a plurality of hyperedges arranged across an input layer, at least one hidden layer, and an output layer. A hyperedge of the plurality of hyperedges represents an artificial neuron within the ANN and comprises a set of role nodes each of which representing a portion of a connective relationship within the ANN. The overlay hypergraph further comprises a plurality of hypernodes. A hypernode of the plurality of hypernodes represents a connection between layers of the ANN and comprises a first role node of a first hyperedge and a second role node of a second hyperedge such that the hypernode functionally connects the first hyperedge and the second hyperedge. The overlay hypergraph further comprises one or more overlay nodes comprising processing logic operable to interact with at least one hypernode, at least one hyperedge, or at least one role node coupled to the overlay node. An example overlay hypergraph based neural network is shown in Figure 9 above.

In one embodiment, the overlay hypergraph is generated from an overlay template such that the overlay hypergraph is a first overlay hypergraph instance of the overlay hypergraph template. The first overlay hypergraph instance is associated with a first context. As such, the first overlay hypergraph instance may be executed based on a received context (input context) matching the first context.

At the step of providing 1304, an input signal is provided to the input layer of the overlay hypergraph.

For example, if the overlay hypergraph comprises an input layer having three input hyperedges, then the input signal may be a three-dimensional vector of values with each value mapping to one of the three input hyperedges.

In one embodiment, the input signal is associated with an input context and the input signal is provided to the input layer of the overlay hypergraph based on the input context and the context associated with the overlay hypergraph. That is, the overlay hypergraph is chosen for execution based on the input context.

Consider for example a first overlay hypergraph instance associated with a first context and a second overlay hypergraph instance associated with a second context. Both hypergraph instances are generated from the same overlay hypergraph template but are associated with different contexts. As such, the weights, biases, and/or overlay based operations may be different for each overlay hypergraph instance (and thus for each context). An input signal is propagated through the first overlay hypergraph instance when an input context matches the first context associated with the first overlay hypergraph instance and the input signal is propagated through the second overlay hypergraph instance when the input context matches the second context associated with the second overlay hypergraph instance. As such, multiple instances of the same overlay hypergraph based neural network may be configured and executed depending on context thereby enabling multiple different version of the same neural network to be utilized and executed.

At the step of propagating 1306, the input signal is propagated through the overlay hypergraph to compute an output signal. Processing logic of at least one of the one or more overlay nodes is executed as part of the input signal being propagated through the overlay hypergraph.

As explained in more detail in relation to Figure 9 above, propagation of the input signal through the overlay hypergraph is based on the observance and propagation of state transitions within nodes (hyperedges and role nodes). This allows the calculations performed by the overlay hypergraph as part of the propagation process to be executed in parallel thereby leading to a fast and efficient estimation of an output signal (prediction) for the input signal.

In one embodiment, the output signal is output from the overlay hypergraph. For example, the output signal is obtained directly from the output layer of the overlay hypergraph, or the output signal is mapped to one or more attributes of a node (e.g., a contract node). The output signal may then be further processed by the executable graph-based model or output from the executable graph-based model for processing by an external system.

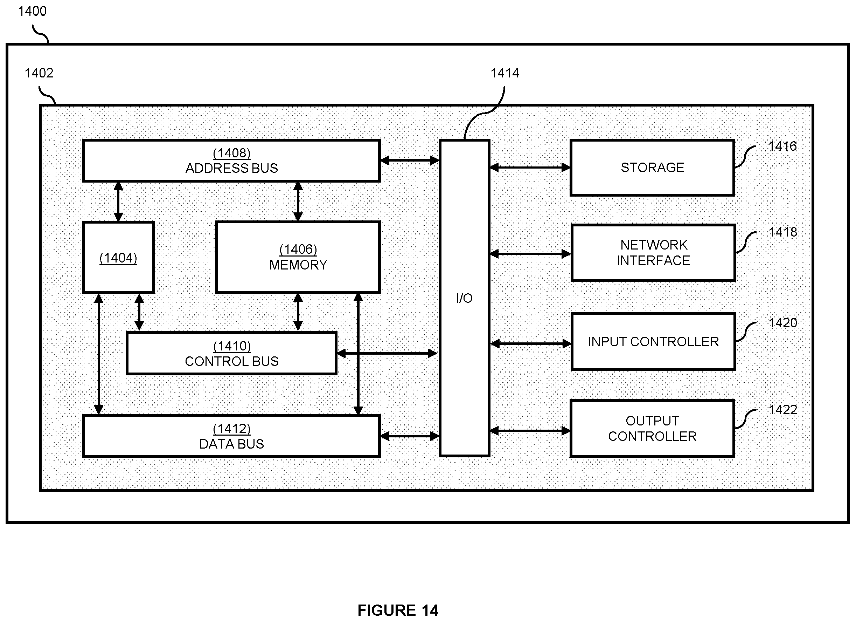

Figure 14 shows an example computing system for carrying out the methods of the present disclosure. Specifically, Figure 14 shows a block diagram of an embodiment of a computing system according to example embodiments of the present disclosure.

Computing system 1400 can be configured to perform any of the operations disclosed herein such as, for example, any of the operations discussed with reference to the functional modules described in relation to Figure 3. The computing system 1400 can be implemented as a conventional computer system, an embedded controller, a laptop, a server, a mobile device, a smartphone, a set-top box, a kiosk, a vehicular information system, one or more processors associated with a television, a customized machine, any other hardware platform, or any combination or multiplicity thereof. In one embodiment, the computing system 1400 is a distributed system configured to function using multiple computing machines interconnected via a data network or bus system.

The computing system 1400 includes one or more computing device(s) 1402. The one or more computing device(s) 1402 of computing system 1400 comprise one or more processors 1404 and memory 1406. One or more processors 1404 can be any general purpose processor(s) configured to execute a set of instructions. For example, one or more processors 1404 can be a processor core, a multiprocessor, a reconfigurable processor, a microcontroller, a digital signal processor ("DSP"), an application-specific integrated circuit ("ASIC"), a graphics processing unit ("GPU"), a neural processing unit ("NPU"), an accelerated processing unit ("APU"), a brain processing unit ("BPU"), a data processing unit ("DPU"), a holographic processing unit ("HPU"), an intelligent processing unit ("IPU"), a microprocessor/microcontroller unit ("MPU/MCU"), a radio processing unit ("RPU"), a tensor processing unit ("TPU"), a vector processing unit ("VPU"), a wearable processing unit ("WPU"), a field programmable gate array ("FPGA"), a programmable logic device ("PLD"), a controller, a state machine, gated logic, discrete hardware component, any other processing unit, or any combination or multiplicity thereof. In one embodiment, one or more processors 1404 include one processor. Alternatively, one or more processors 1404 include a plurality of processors that are operatively connected. For example, the one or more processors 1404 can be multiple processing units, a single processing core, multiple processing cores, special purpose processing cores, co-processors, or any combination thereof. One or more processors 1404 are communicatively coupled to memory 1406 via address bus 1408, control bus 1410, and data bus 1412.

Memory 1406 can include non-volatile memories such as read-only memory ("ROM"), programable read-only memory ("PROM"), erasable programmable read-only memory ("EPROM"), flash memory, or any other device capable of storing program instructions or data with or without applied power. The memory 1406 can also include volatile memories, such as random-access memory ("RAM"), static random-access memory ("SRAM"), dynamic random-access memory ("DRAM"), and synchronous dynamic random-access memory ("SDRAM"). The memory 1406 can comprise single or multiple memory modules. While the memory 1406 is depicted as part of the one or more computing device(s) 1402, the skilled person will recognize that the memory 1406 can be separate from the one or more computing device(s) 1402.

Memory 1406 can store information that can be accessed by one or more processors 1404. For instance, memory 1406 (e.g., one or more non-transitory computer-readable storage mediums, memory devices) can include computer-readable instructions (not shown) that can be executed by one or more processors 1404. The computer-readable instructions can be software written in any suitable programming language or can be implemented in hardware. Additionally, or alternatively, the computer-readable instructions can be executed in logically and/or virtually separate threads on one or more processors 1404. For example, memory 1406 can store instructions (not shown) that when executed by one or more processors 1404 cause one or more processors 1404 to perform operations such as any of the operations and functions for which computing system 1400 is configured, as described herein. In addition, or alternatively, memory 1406 can store data (not shown) that can be obtained, received, accessed, written, manipulated, created, and/or stored. The data can include, for instance, the data and/or information described herein in relation to Figures 1 to 14. In some implementations, the one or more computing device(s) 1402 can obtain from and/or store data in one or more memory device(s) that are remote from the computing system 1400.

The one or more computing device(s) 1402 further comprise I/O interface 1414 communicatively coupled to address bus 1408, control bus 1410, and data bus 1412. The I/O interface 1414 is configured to couple to one or more external devices (e.g., to receive and send data from/to one or more external devices). Such external devices, along with the various internal devices, may also be known as peripheral devices. The I/O interface 1414 may include both electrical and physical connections for operably coupling the various peripheral devices to the one or more computing device(s) 1402. The I/O interface 1414 may be configured to communicate data, addresses, and control signals between the peripheral devices and the one or more computing device(s) 1402. The I/O interface 1414 may be configured to implement any standard interface, such as a small computer system interface("SCSI"), serial-attached SCSI ("SAS"), fiber channel, peripheral component interconnect ("PCI"), PCI express ("PCIe"), serial bus, parallel bus, advanced technology attachment ("ATA"), serialATA ("SATA"), universal serial bus ("USB"), Thunderbolt, FireWire, various video buses, and the like. The I/O interface 1414 is configured to implement only one interface or bus technology. Alternatively, the I/O interface 1414 is configured to implement multiple interfaces or bus technologies. The I/O interface 1414 may include one or more buffers for buffering transmissions between one or more external devices, internal devices, the one or more computing device(s), or the one or more processors 1404. The I/O interface 1414 may couple the one or more computing device(s) 1402 to various input devices, including mice, touch screens, scanners, biometric readers, electronic digitizers, sensors, receivers, touchpads, trackballs, cameras, microphones, keyboards, any other pointing devices, or any combinations thereof. The I/O interface 1414 may couple the one or more computing device(s) 1402 to various output devices, including video displays, speakers, printers, projectors, tactile feedback devices, automation control, robotic components, actuators, motors, fans, solenoids, valves, pumps, transmitters, signal emitters, lights, and so forth.

Computing system 1400 further comprises storage unit 1416, network interface 1418, input controller 1420, and output controller 1422. Storage unit 1416, network interface 1418, input controller 1420, and output controller 1422 are communicatively coupled to the central control unit (i.e., the memory 1406, the address bus 1408, the control bus 1410, and the data bus 1412) via I/O interface 1414. The network interface 1418 communicatively couples the computing system 1400 to one or more networks such as wide area networks ("WAN"), local area networks ("LAN"), intranets, the Internet, wireless access networks, wired networks, mobile networks, telephone networks, optical networks, or combinations thereof. The network interface 1418 may facilitate communication with packet switched networks or circuit switched networks which use any topology and may use any communication protocol. Communication links within the network may involve various digital or analog communication media such as fiber optic cables, free-space optics, waveguides, electrical conductors, wireless links, antennas, radio-frequency communications, and so forth.

Storage unit 1416 is a computer readable medium, preferably a non-transitory computer readable medium, comprising one or more programs, the one or more programs comprising instructions which when executed by the one or more processors 1404 cause computing system 1400 to perform the method steps of the present disclosure. Alternatively, storage unit 1416 is a transitory computer readable medium. Storage unit 1416 can include a hard disk, a floppy disk, a compact disc read-only memory ("CD-ROM"), a digital versatile disc ("DVD"), a Blu-ray disc, a magnetic tape, a flash memory, another non-volatile memory device, a solid-state drive ("SSD"), any magnetic storage device, any optical storage device, any electrical storage device, any semiconductor storage device, any physical-based storage device, any other data storage device, or any combination or multiplicity thereof. In one embodiment, the storage unit 1416 stores one or more operating systems, application programs, program modules, data, or any other information. The storage unit 1416 is part of the one or more computing device(s) 1402. Alternatively, the storage unit 1416 is part of one or more other computing machines that are in communication with the one or more computing device(s) 1402, such as servers, database servers, cloud storage, network attached storage, and so forth.

**Claims**

1. A system comprising:
   a memory storing an artificial neural network (ANN) modelled as an overlay hypergraph, the overlay hypergraph comprising:

   a plurality of hyperedges arranged across an input layer, at least one hidden layer, and an output layer, wherein each hyperedge of the plurality of hyperedges represents an artificial neuron within the ANN and comprises a set of role nodes each of which represents a portion of a connective relationship within the ANN;
   a plurality of role nodes, wherein a role node of the plurality of role nodes represents a connection between layers of the ANN and comprises a first connective relationship associated with a first hyperedge within a first layer and a second connective relationship associated with a second hyperedge within a second layer such that the role node functionally connects the first hyperedge and the second hyperedge; and
   one or more overlay nodes comprising processing logic operable to interact with at least one hyperedge or at least one role node coupled to the one or more overlay nodes; and
   processing circuitry coupled to the memory and configured to:

   provide an input signal to the input layer of the overlay hypergraph; and
   propagate the input signal through the overlay hypergraph to compute an output signal, wherein processing logic of at least one of the one or more overlay nodes is executed as part of the input signal being propagated through the overlay hypergraph, wherein the one or more overlay nodes comprise a first overlay node coupled to at least one hyperedge or at least one role node, wherein the processing logic of the first overlay node is configured to perturb, based on a perturbation function, a first signal to generate a second signal, and wherein the first signal is received as input by the at least one hyperedge or at least one role node during propagation of the input signal and the second signal is provided as output by the at least one hyperedge or at least one role node during propagation of the input signal.

2. The system of claim 1 wherein the perturbation function is a function of time.

3. The system of claim 1 wherein the perturbation function applies a weighting to the first signal.

4. The system of claim 3 wherein the weighting is predetermined.

5. The system of claim 3 wherein the weighting is learnt during training of the overlay hypergraph.

6. The system of claim 1 wherein the one or more overlay nodes comprise a second overlay node coupled to the at least one hyperedge or at least one role node.

7. The system of claim 6 wherein the first overlay node and the second overlay node are functionally composed.

8. The system of claim 1 wherein the memory further stores an overlay hypergraph template from which the overlay hypergraph is generated such that the overlay hypergraph is a first overlay hypergraph instance of the overlay hypergraph template.

9. The system of claim 1 wherein the memory further stores an executable graph-based model including a container node, wherein the container node encapsulates the overlay hypergraph within the executable graph-based model.

10. The system of claim 1 wherein the memory further stores a neural mesh comprising the overlay hypergraph coupled to a second overlay hypergraph such that output from at least one hyperedge of the output layer of the overlay hypergraph is provided as input to at least one hyperedge of the input layer of the second overlay hypergraph or output from at least one hyperedge of the output layer of the second overlay hypergraph is provided as input to at least one hyperedge of the input layer of the overlay hypergraph.

11. A method comprising:
obtaining, by processing circuitry, an artificial neural network (ANN) modelled as an overlay hypergraph, the overlay hypergraph comprising:

a plurality of hyperedges arranged across an input layer, at least one hidden layer, and an output layer, wherein each hyperedge of the plurality of hyperedges represents an artificial neuron within the ANN and comprises a set of role nodes each of which represents a portion of a connective relationship within the ANN;
a plurality of role nodes, wherein a role node of the plurality of role nodes represents a connection between layers of the ANN and comprises a first connective relationship associated with a first hyperedge within a first layer and a second connective relationship associated with a second hyperedge within a second layer such that the role node functionally connects the first hyperedge and the second hyperedge; and
one or more overlay nodes comprising processing logic operable to interact with at least one hyperedge or at least one role node coupled to the one or more overlay nodes; and
providing, by the processing circuitry, an input signal to the input layer of the overlay hypergraph; and
propagating, by the processing circuitry, the input signal through the overlay hypergraph to compute an output signal, wherein processing logic of at least one of the one or more overlay nodes is executed as part of the input signal being propagated through the overlay hypergraph, wherein the one or more overlay nodes comprise a first overlay node coupled to at least one hyperedge or at least one role node, wherein the processing logic of the first overlay node is configured to perturb, based on a perturbation function, a first signal to generate a second signal, and wherein the first signal is received as input by the at least one hyperedge or at least one role node during propagation of the input signal and the second signal is provided as output by the at least one hyperedge or at least one role node during propagation of the input signal.

12. A non-transitory computer readable medium including instructions which, when executed by processing circuitry, cause the processing circuitry to:
obtain an artificial neural network (ANN) modelled as an overlay hypergraph, the overlay hypergraph comprising:

a plurality of hyperedges arranged across an input layer, at least one hidden layer, and an output layer, wherein a hyperedge of the plurality of hyperedges represents an artificial neuron within the ANN and comprises a set of role nodes each of which representing a portion of a connective relationship within the ANN;
a plurality of role nodes, wherein a role node of the plurality of role nodes represents a connection between layers of the ANN and comprises a first connective relationship associated with a first hyperedge within a first layer and a second connective relationship associated with a second hyperedge within a second layer such that the role node functionally connects the first hyperedge and the second hyperedge; and
one or more overlay nodes comprising processing logic operable to interact with at least one hyperedge or at least one role node coupled to the one or more overlay nodes; and
provide an input signal to the input layer of the overlay hypergraph; and
propagate the input signal through the overlay hypergraph to compute an output signal, wherein processing logic of at least one of the one or more overlay nodes is executed as part of the input signal being propagated through the overlay hypergraph, wherein the one or more overlay nodes comprise a first overlay node coupled to at least one hyperedge or at least one role node, wherein the processing logic of the first overlay node is configured to perturb, based on a perturbation function, a first signal to generate a second signal, and wherein the first signal is received as input by the at least one hyperedge or at least one role node during propagation of the input signal and the second signal is provided as output by the at least one hyperedge or at least one role node during propagation of the input signal.

**Patentansprüche**

1. System, umfassend:
einen Speicher, der ein künstliches neuronales Netzwerk (ANN) speichert, das als Überlagerungshypergraph modelliert ist, wobei der Überlagerungshypergraph Folgendes umfasst:

   eine Vielzahl von Hyperkanten, die über einer Eingabeschicht, zumindest einer verborgenen Schicht und einer Ausgabeschicht angeordnet sind, wobei jede Hyperkante aus der Vielzahl von Hyperkanten ein künstliches Neuron innerhalb des ANN darstellt und einen Satz von Rollenknoten umfasst, von denen jeder einen Anteil einer Verbindungsbeziehung innerhalb des ANN darstellt;

   eine Vielzahl von Rollenknoten, wobei ein Rollenknoten aus der Vielzahl von Rollenknoten eine Verbindung zwischen Schichten des ANN darstellt und eine erste Verbindungsbeziehung assoziiert mit einer ersten Hyperkante innerhalb einer ersten Schicht und eine zweite Verbindungsbeziehung assoziiert mit einer zweiten Hyperkante innerhalb einer zweiten Schicht umfasst, sodass der Rollenknoten die erste Hyperkante und die zweite Hyperkante funktional verbindet; und

   einen oder mehrere Überlagerungsknoten, die Verarbeitungslogik umfassen, die bedienbar ist, um mit zumindest einer Hyperkante oder zumindest einem Rollenknoten gekoppelt an den einen oder die mehreren Überlagerungsknoten zu interagieren; und
   Verarbeitungsschaltung, die an den Speicher gekoppelt und zu Folgendem konfiguriert ist:
   Bereitstellen eines Eingabesignals an die Eingabeschicht des Überlagerungshypergraphen; und
   Ausbreiten des Eingabesignals durch den Überlagerungshypergraphen, um ein Ausgabesignal zu berechnen, wobei Verarbeitungslogik von zumindest einem von dem einen oder den mehreren Überlagerungsknoten als Teil des Eingabesignals ausgeführt wird, das durch den Überlagerungshypergraphen ausgebreitet wird, wobei der eine oder die mehreren Überlagerungsknoten einen ersten Überlagerungsknoten gekoppelt an zumindest eine Hyperkante oder zumindest einen Rollenknoten umfassen, wobei die Verarbeitungslogik des ersten Überlagerungsknotens dazu konfiguriert ist, basierend auf einer Störfunktion ein erstes Signal zu stören, um ein zweites Signal zu erzeugen, und wobei das erste Signal als Eingabe durch die zumindest eine Hyperkante oder den zumindest einen Rollenknoten während Ausbreitung des Eingabesignals empfangen wird und das zweite Signal als Ausgabe durch die zumindest eine Hyperkante oder den zumindest einen Rollenknoten während Ausbreitung des Eingabesignals bereitgestellt wird.

2. System nach Anspruch 1, wobei die Störfunktion eine Funktion von Zeit ist.

3. System nach Anspruch 1, wobei die Störfunktion eine Gewichtung auf das erste Signal anwendet.

4. System nach Anspruch 3, wobei die Gewichtung vorbestimmt ist.

5. System nach Anspruch 3, wobei die Gewichtung während Training des Überlagerungshypergraphen gelernt wird.

6. System nach Anspruch 1, wobei der eine oder die mehreren Überlagerungsknoten einen zweiten Überlagerungsknoten gekoppelt an die zumindest eine Hyperkante oder den zumindest einen Rollenknoten umfassen.

7. System nach Anspruch 6, wobei der erste Überlagerungsknoten und der zweite Überlagerungsknoten funktional zusammengesetzt sind.

8. System nach Anspruch 1, wobei der Speicher ferner eine Überlagerungshypergraphenvorlage speichert, aus welcher der Überlagerungshypergraph erzeugt wird, sodass der Überlagerungshypergraph eine erste Überlagerungshypergrapheninstanz der Überlagerungshypergraphenvorlage ist.

9. System nach Anspruch 1, wobei der Speicher ferner ein ausführbares graphbasiertes Modell speichert, das einen Containerknoten beinhaltet, wobei der Containerknoten den Überlagerungshypergraphen innerhalb des ausführbaren graphbasierten Modells einkapselt.

10. System nach Anspruch 1, wobei der Speicher ferner ein neuronales Netz speichert, das den Überlagerungshyper-

EP 4 425 379 B1

graphen gekoppelt an einen zweiten Überlagerungshypergraphen umfasst, sodass Ausgabe von zumindest einer Hyperkante der Ausgabeschicht des Überlagerungshypergraphen als Eingabe an zumindest eine Hyperkante der Eingabeschicht des zweiten Überlagerungshypergraphen bereitgestellt wird oder Ausgabe von zumindest einer Hyperkante der Ausgabeschicht des zweiten Überlagerungshypergraphen als Eingabe an zumindest eine Hyperkante der Eingabeschicht des Überlagerungshypergraphen bereitgestellt wird.

11. Verfahren, umfassend:
Erhalten, durch Verarbeitungsschaltung, eines künstlichen neuronalen Netzwerks (ANN), das als Überlagerungshypergraph modelliert ist, wobei der Überlagerungshypergraph Folgendes umfasst:

eine Vielzahl von Hyperkanten, die über einer Eingabeschicht, zumindest einer verborgenen Schicht und einer Ausgabeschicht angeordnet sind, wobei jede Hyperkante aus der Vielzahl von Hyperkanten ein künstliches Neuron innerhalb des ANN darstellt und einen Satz von Rollenknoten umfasst, von denen jeder einen Anteil einer Verbindungsbeziehung innerhalb des ANN darstellt;

eine Vielzahl von Rollenknoten, wobei ein Rollenknoten aus der Vielzahl von Rollenknoten eine Verbindung zwischen Schichten des ANN darstellt und eine erste Verbindungsbeziehung assoziiert mit einer ersten Hyperkante innerhalb einer ersten Schicht und eine zweite Verbindungsbeziehung assoziiert mit einer zweiten Hyperkante innerhalb einer zweiten Schicht umfasst, sodass der Rollenknoten die erste Hyperkante und die zweite Hyperkante funktional verbindet; und

einen oder mehrere Überlagerungsknoten, die Verarbeitungslogik umfassen, die bedienbar ist, um mit zumindest einer Hyperkante oder zumindest einem Rollenknoten gekoppelt an den einen oder die mehreren Überlagerungsknoten zu interagieren; und

Bereitstellen, durch die Verarbeitungsschaltung, eines Eingabesignals an die Eingabeschicht des Überlagerungshypergraphen; und

Ausbreiten, durch die Verarbeitungsschaltung, des Eingabesignals durch den Überlagerungshypergraphen, um ein Ausgabesignal zu berechnen, wobei Verarbeitungslogik von zumindest einem von dem einen oder den mehreren Überlagerungsknoten als Teil des Eingabesignals ausgeführt wird, das durch den Überlagerungshypergraphen ausgebreitet wird, wobei der eine oder die mehreren Überlagerungsknoten einen ersten Überlagerungsknoten gekoppelt an zumindest eine Hyperkante oder zumindest einen Rollenknoten umfassen, wobei die Verarbeitungslogik des ersten Überlagerungsknotens dazu konfiguriert ist, basierend auf einer Störfunktion ein erstes Signal zu stören, um ein zweites Signal zu erzeugen, und wobei das erste Signal als Eingabe durch die zumindest eine Hyperkante oder den zumindest einen Rollenknoten während Ausbreitung des Eingabesignals empfangen wird und das zweite Signal als Ausgabe durch die zumindest eine Hyperkante oder den zumindest einen Rollenknoten während Ausbreitung des Eingabesignals bereitgestellt wird.

12. Nichtflüchtiges computerlesbares Medium, das Anweisungen beinhaltet, die, wenn durch Verarbeitungsschaltung ausgeführt, die Verarbeitungsschaltung zu Folgendem veranlassen:
Erhalten eines künstlichen neuronalen Netzwerks (ANN), das als Überlagerungshypergraph modelliert ist, wobei der Überlagerungshypergraph Folgendes umfasst:

eine Vielzahl von Hyperkanten, die über einer Eingabeschicht, zumindest einer verborgenen Schicht und einer Ausgabeschicht angeordnet sind, wobei eine Hyperkante aus der Vielzahl von Hyperkanten ein künstliches Neuron innerhalb des ANN darstellt und einen Satz von Rollenknoten umfasst, von denen jeder einen Anteil einer Verbindungsbeziehung innerhalb des ANN darstellt;

eine Vielzahl von Rollenknoten, wobei ein Rollenknoten aus der Vielzahl von Rollenknoten eine Verbindung zwischen Schichten des ANN darstellt und eine erste Verbindungsbeziehung assoziiert mit einer ersten Hyperkante innerhalb einer ersten Schicht und eine zweite Verbindungsbeziehung assoziiert mit einer zweiten Hyperkante innerhalb einer zweiten Schicht umfasst, sodass der Rollenknoten die erste Hyperkante und die zweite Hyperkante funktional verbindet; und

einen oder mehrere Überlagerungsknoten, die Verarbeitungslogik umfassen, die bedienbar ist, um mit zumindest einer Hyperkante oder zumindest einem Rollenknoten gekoppelt an den einen oder die mehreren Überlagerungsknoten zu interagieren; und

Bereitstellen eines Eingabesignals an die Eingabeschicht des Überlagerungshypergraphen; und

Ausbreiten des Eingabesignals durch den Überlagerungshypergraphen, um ein Ausgabesignal zu berechnen, wobei Verarbeitungslogik von zumindest einem von dem einen oder den mehreren Überlagerungsknoten als Teil des Eingabesignals ausgeführt wird, das durch den Überlagerungshypergraphen ausgebreitet wird, wobei der eine oder die mehreren Überlagerungsknoten einen ersten Überlagerungsknoten gekoppelt an zumindest eine Hyperkante oder zumindest einen Rollenknoten umfassen, wobei die Verarbeitungslogik des ersten Überlagerungsknotens dazu konfiguriert ist, basierend auf einer Störfunktion ein erstes Signal zu stören, um ein zweites Signal zu erzeugen, und wobei das erste Signal als Eingabe durch die zumindest eine Hyperkante oder den zumindest einen Rollenknoten während Ausbreitung des Eingabesignals empfangen wird und das zweite Signal als Ausgabe durch die zumindest eine Hyperkante oder den zumindest einen Rollenknoten während Ausbreitung des Eingabesignals bereitgestellt wird.

**Revendications**

1.  Système comprenant :
    une mémoire stockant un réseau neuronal artificiel (ANN) modélisé en tant qu'hypergraphe de superposition, l'hypergraphe de superposition comprenant :

    une pluralité d'hyperbords agencés à travers une couche d'entrée, au moins une couche cachée et une couche de sortie, dans lequel chaque hyperbord de la pluralité d'hyperbords représente un neurone artificiel dans l'ANN et comprend un ensemble de nœuds de rôle dont chacun représente une partie d'une relation de connexion dans l'ANN ;
    une pluralité de nœuds de rôle, dans lequel un nœud de rôle de la pluralité de nœuds de rôle représente une connexion entre des couches de l'ANN et comprend une première relation de connexion associée à un premier hyperbord au sein d'une première couche et une seconde relation de connexion associée à un second hyperbord au sein d'une seconde couche de sorte que le nœud de rôle connecte fonctionnellement le premier hyperbord et le second hyperbord ; et
    un ou plusieurs nœuds de superposition comprenant une logique de traitement servant à interagir avec au moins un hyperbord ou au moins un nœud de rôle couplé aux un ou plusieurs nœuds de superposition ; et
    des circuits de traitement couplés à la mémoire et configurés pour :

    fournir un signal d'entrée à la couche d'entrée de l'hypergraphe de superposition ; et
    propager le signal d'entrée à travers l'hypergraphe de superposition pour calculer un signal de sortie, dans lequel la logique de traitement d'au moins un des un ou plusieurs nœuds de superposition est exécutée dans le cadre de la propagation du signal d'entrée à travers l'hypergraphe de superposition, dans lequel les un ou plusieurs nœuds de superposition comprennent un premier nœud de superposition couplé à au moins un hyperbord ou à au moins un nœud de rôle, dans lequel la logique de traitement du premier nœud de superposition est configurée pour perturber, sur la base d'une fonction de perturbation, un premier signal pour générer un second signal, et dans lequel le premier signal est reçu en tant qu'entrée par l'au moins un hyperbord ou au moins un nœud de rôle pendant la propagation du signal d'entrée et le second signal est fourni en tant que sortie par l'au moins un hyperbord ou au moins un nœud de rôle pendant la propagation du signal d'entrée.

2.  Système de la revendication 1, dans lequel la fonction de perturbation est une fonction du temps.

3.  Système de la revendication 1, dans lequel la fonction de perturbation applique une pondération au premier signal.

4.  Système de la revendication 3, dans lequel la pondération est prédéterminée.

5.  Système de la revendication 3, dans lequel la pondération est apprise pendant l'entraînement de l'hypergraphe de superposition.

6.  Système de la revendication 1, dans lequel les un ou plusieurs nœuds de superposition comprennent un second nœud de superposition couplé à l'au moins un hyperbord ou à l'au moins un nœud de rôle.

7.  Système de la revendication 6, dans lequel le premier nœud de superposition et le second nœud de superposition sont composés fonctionnellement.

8.  Système de la revendication 1, dans lequel la mémoire stocke en outre un patron d'hypergraphe de superposition à partir duquel l'hypergraphe de superposition est généré de sorte que l'hypergraphe de superposition soit une première instance d'hypergraphe de superposition du patron d'hypergraphe de superposition.

9.  Système de la revendication 1, dans lequel la mémoire stocke en outre un modèle sur base de graphe exécutable comprenant un nœud conteneur, dans lequel le nœud conteneur englobe l'hypergraphe de superposition à l'intérieur du modèle sur base de graphe exécutable.

10. Système de la revendication 1, dans lequel la mémoire stocke en outre un maillage neuronal comprenant l'hypergraphe de superposition couplé à un second hypergraphe de superposition de sorte que la sortie d'au moins un hyperbord de la couche de sortie de l'hypergraphe de superposition soit fournie en tant qu'entrée à au moins un hyperbord de la couche d'entrée du second hypergraphe de superposition ou que la sortie d'au moins un hyperbord de la couche de sortie du second hypergraphe de superposition soit fournie en tant qu'entrée à au moins un hyperbord de la couche d'entrée de l'hypergraphe de superposition.

11. Procédé comprenant :
l'obtention, par des circuits de traitement, d'un réseau neuronal artificiel (ANN) modélisé en tant qu'hypergraphe de superposition, l'hypergraphe de superposition comprenant :

une pluralité d'hyperbords agencés à travers une couche d'entrée, au moins une couche cachée et une couche de sortie, dans lequel chaque hyperbord de la pluralité d'hyperbords représente un neurone artificiel dans l'ANN et comprend un ensemble de nœuds de rôle dont chacun représente une partie d'une relation de connexion dans l'ANN ;
une pluralité de nœuds de rôle, dans lequel un nœud de rôle de la pluralité de nœuds de rôle représente une connexion entre des couches de l'ANN et comprend une première relation de connexion associée à un premier hyperbord au sein d'une première couche et une seconde relation de connexion associée à un second hyperbord au sein d'une seconde couche de sorte que le nœud de rôle connecte fonctionnellement le premier hyperbord et le second hyperbord ; et
un ou plusieurs nœuds de superposition comprenant une logique de traitement servant à interagir avec au moins un hyperbord ou au moins un nœud de rôle couplé aux un ou plusieurs nœuds de superposition ; et
la fourniture, par les circuits de traitement, d'un signal d'entrée à la couche d'entrée de l'hypergraphe de superposition ; et
la propagation, par les circuits de traitement, du signal d'entrée à travers l'hypergraphe de superposition pour calculer un signal de sortie, dans lequel la logique de traitement d'au moins un des un ou plusieurs nœuds de superposition est exécutée dans le cadre de la propagation du signal d'entrée à travers l'hypergraphe de superposition, dans lequel les un ou plusieurs nœuds de superposition comprennent un premier nœud de superposition couplé à au moins un hyperbord ou à au moins un nœud de rôle, dans lequel la logique de traitement du premier nœud de superposition est configurée pour perturber, sur la base d'une fonction de perturbation, un premier signal pour générer un second signal, et dans lequel le premier signal est reçu en tant qu'entrée par l'au moins un hyperbord ou au moins un nœud de rôle pendant la propagation du signal d'entrée et le second signal est fourni en tant que sortie par l'au moins un hyperbord ou au moins un nœud de rôle pendant la propagation du signal d'entrée.

12. Support non transitoire lisible par ordinateur comprenant des instructions qui, lorsqu'elles sont exécutées par les circuits de traitement, amènent les circuits de traitement à :
obtenir un réseau neuronal artificiel (ANN) modélisé en tant qu'hypergraphe de superposition, l'hypergraphe de superposition comprenant :

une pluralité d'hyperbords agencés à travers une couche d'entrée, au moins une couche cachée et une couche de sortie, dans lequel un hyperbord de la pluralité d'hyperbords représente un neurone artificiel dans l'ANN et comprend un ensemble de nœuds de rôle dont chacun représente une partie d'une relation de connexion dans l'ANN ;
une pluralité de nœuds de rôle, dans lequel un nœud de rôle de la pluralité de nœuds de rôle représente une connexion entre des couches de l'ANN et comprend une première relation de connexion associée à un premier hyperbord au sein d'une première couche et une seconde relation de connexion associée à un second hyperbord au sein d'une seconde couche de sorte que le nœud de rôle connecte fonctionnellement le premier hyperbord et le second hyperbord ; et
un ou plusieurs nœuds de superposition comprenant une logique de traitement servant à interagir avec au moins un hyperbord ou au moins un nœud de rôle couplé aux un ou plusieurs nœuds de superposition ; et
fournir un signal d'entrée à la couche d'entrée de l'hypergraphe de superposition ; et
propager le signal d'entrée à travers l'hypergraphe de superposition pour calculer un signal de sortie, dans lequel la logique de traitement d'au moins un des un ou plusieurs nœuds de superposition est exécutée dans le cadre de la propagation du signal d'entrée à travers l'hypergraphe de superposition, dans lequel les un ou plusieurs nœuds de superposition comprennent un premier nœud de superposition couplé à au moins un hyperbord ou à au moins un nœud de rôle, dans lequel la logique de traitement du premier nœud de superposition est configurée pour perturber, sur la base d'une fonction de perturbation, un premier signal pour générer un second signal, et dans lequel le premier signal est reçu en tant qu'entrée par l'au moins un hyperbord ou au moins un nœud de rôle pendant la propagation du signal d'entrée et le second signal est fourni en tant que sortie par l'au moins un hyperbord ou au moins un nœud de rôle pendant la propagation du signal d'entrée.

PRIOR ART

100

**Presentation Layer**
<u>102</u>

**Processing Logic Layer**
<u>104</u>

**Data Access Layer**
<u>106</u>

**Database Layer**
<u>108</u>

FIGURE 1

FIGURE 2

Configuration
334

Context
336

Data/Information
338

Stimuli
340

Network
342

Outcome
344

System
300

Interface
Module
304

Executable Graph-Based Model
302

Controller
Module
306

Data/
Information
Management
Module
314

Security
Module
322

Analytics
Module
332

Transaction
Module
308

Overlay
Management
Module
316

Visualization
Module
324

Template
Management
Module
346

Interaction
Module
326

Context
Module
310

Memory
Management
Module
318

Neural
Network
Module
348

Administration
Module
328

Stimuli
Management
Module
312

Storage
Management
Module
320

Operations
Module
330

Contract
Management
Module
350

FIGURE 3

**Node**
**402**

**Properties**
**404**

416
418
420
422
424
426
428

**Attributes**
**410**

**Scopes**
**454**

**Metadata**
**412**

**Node Type**
**408**

**Scope**
**452**

**Inheritance Identifiers**
406

430
432
434

**Node Configuration**
**414**

**Node Configuration Strategy**
**436**

**Node Configuration Extension**
**438**

**Predetermined Node Types**
**440**

442
444
446
447
448
450

FIGURE 4A

FIGURE 4B

**Executable Node**
**488**

**Overlay Manager**
**490**

**Overlay**
**494**

**Node**
**489**

**Attributes**
**492**

**Attribute**
**496**

**Attribute**
**498**

**Executable Contract Node**
**470**

**Contract Node**
**472**

**Node Mapping**
**478**

**Attribute Mapping**
**480**

**Attributes**
**476**

**Attribute**
**486**

**Contract Behavior**
**482**

**Overlay Manager**
**474**

**Overlay**
**484**

FIGURE 4C

# Run-Time Node
## 502

### Node Instance
#### 506

**Node Template**
546

**Identifier**
550

**Version**
552

**Attribute Instance**
554

**Metadata**
556

**Node Type Instance**
548

### Node Template
#### 504

**Properties**
508

520  522  524  526  528  530

**Attribute Templates**
514

**Scopes**
544

**Metadata**
516

**Scope**
542

**Inheritance Identifiers**
510

532  534  536

**Node Configuration**
518

**Node Configuration Strategy**
538

**Node Configuration Extension**
540

**Node Type Template**
512

FIGURE 5A

44

FIGURE 5B

EP 4 425 379 B1

**Executable Run-Time Node**
581

**Overlay Manager**
584

**Run-Time Overlay**
586

590 ..... 588

**Base Run-Time Node**
582

**Node Instance**
506

**Node Template**
504

FIGURE 5C

**Executable Run-Time Node**
**581**

**Overlay Manager**
**584**

**Run-Time Overlay**
**586**

590 ···· 588

**Base Run-Time Node**
**582**

**Executable Node Instance**
**560**

Base Node
Instance
572

**Overlay Manager**
**574**

**Run-Time Overlay**
**576**

580 ···· 578

**Executable Node Template**
**558**

Base Node
Template
562

*owns*

**Overlay Manager**
**564**

**Run-Time Overlay**
**566**

570 —— 568

FIGURE 5D

FIGURE 6

700

FIGURE 7

FIGURE 8

FIGURE 9A

Output Layer

Second Hidden Layer

First Hidden Layer

Input Layer

900

950 952 954 956

936 938 940 942

944 946 948 950

910 912 926 928 930 926 914 916

934 918 920 928 930 932 922 924

908 902 904 906

FIGURE 9B

FIGURE 10

FIGURE 11

FIGURE 12

1300

```
┌─────────────────────────────────┐
│            (1302)               │
│    OBTAIN AN OVERLAY HYPERGRAPH │
│      BASED NEURAL NETWORK       │
└─────────────────────────────────┘
                │
                ▼
┌─────────────────────────────────┐
│            (1304)               │
│    PROVIDE AN INPUT SIGNAL TO THE│
│   OVERLAY HYPERGRAPH BASED NEURAL│
│            NETWORK              │
└─────────────────────────────────┘
                │
                ▼
┌─────────────────────────────────┐
│            (1306)               │
│    PROPAGATE THE INPUT SIGNAL   │
│   THROUGH THE OVERLAY HYPERGRAPH │
│      BASED NEURAL NETWORK       │
└─────────────────────────────────┘
```

FIGURE 13

FIGURE 14

1400

1402

1414

(1408)
ADDRESS BUS

(1404)

(1406)
MEMORY

(1410)
CONTROL BUS

(1412)
DATA BUS

I/O

STORAGE 1416

NETWORK
INTERFACE 1418

INPUT CONTROLLER 1420

OUTPUT
CONTROLLER 1422

EP 4 425 379 B1

57

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63449245
- US 63449241 B
- US 63448724 B
- US 63448722 B
- US 63448738 B
- US 2021306377 A
- CN 114547325